(19) Europäisches Patentamt
European Patent Office
Office européen des brevets

(11) **EP 4 309 534 A2**

(12) **EUROPÄISCHE PATENTANMELDUNG**

(43) Veröffentlichungstag:
**24.01.2024 Patentblatt 2024/04**

(21) Anmeldenummer: 23186086.7

(22) Anmeldetag: **10.12.2020**

(51) Internationale Patentklassifikation (IPC):
***A41H 3/00*** *(2006.01)* ***A41H 3/04*** *(2006.01)*

(52) Gemeinsame Patentklassifikation (CPC):
**A41H 3/007; A41H 3/04**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2019 DE 102019008689**

(62) Dokumentnummer(n) der früheren Anmeldung(en) nach Art. 76 EPÜ:
**20824919.3 / 4 076 078**

(71) Anmelder: **Lizzi Holding GmbH**
**78467 Konstanz (DE)**

(72) Erfinder:
• **ZIEGLER, Verena**
**78467 Konstanz (DE)**

• **LINK, Frauke**
**78476 Allensbach (DE)**

(74) Vertreter: **Müller-Boré & Partner**
**Patentanwälte PartG mbB**
**Friedenheimer Brücke 21**
**80639 München (DE)**

Bemerkungen:
•Diese Anmeldung ist am 18.07.23 als Teilanmeldung zu der unter INID-Code 62 erwähnten Anmeldung eingereicht worden.
•Die Patentansprüche wurden nach dem Anmeldetag eingereicht (R. 68(4) EPÜ).

(54) **VERFAHREN UND VORRICHTUNG ZUM BEREITSTELLEN ZUMINDEST EINES SCHNITTMUSTERS EINES INDIVIDUELL FÜR EINEN KUNDEN ANZUFERTIGENDEN KLEIDUNGSSTÜCKS**

(57) Die vorliegende Erfindung betrifft ein Verfahren, ein Computerprogrammprodukt und eine Vorrichtung zum Bereitstellen zumindest eines Schnittmusters eines individuell für einen Kunden anzufertigenden Kleidungsstücks. Dabei umfasst das Verfahren die Schritte:
- Erzeugen eines virtuellen individuellen 3D-Körpermodells (20) des Kunden auf Basis von individuell ermittelten 3D-Körperhülledaten (10) des Kunden und bereitgestellten allgemeinen Skelettdaten (15);
- Erzeugen eines virtuellen individuellen 3D-Kleidungsstücks (40) auf Basis eines virtuellen 3D-Idealdesigns (30) und des erzeugten virtuellen individuellen 3D-Körpermodells (20);
- Erzeugen des zumindest einen Schnittmusters durch Abwickeln des virtuellen individuellen 3D-Kleidungsstücks (40), wobei das Abwickeln des virtuellen individuellen 3D-Kleidungsstücks (40) algorithmisch auf Basis zumindest eines Schnittregelwerks (52, 54) erfolgt.

Fig. 1

**Beschreibung**

Die Erfindung betrifft ein Verfahren, eine Vorrichtung und ein Computerprogrammprodukt zum Bereitstellen zumindest eines Schnittmusters eines individuell für einen Kunden anzufertigenden Kleidungsstücks.

Zum Erwerb eines individuellen bzw. maßgeschneiderten Kleidungsstücks geht ein Kunde herkömmlicherweise zu einem Schneider, der zum Anfertigen des Kleidungsstücks beim Kunden Maß nimmt. Dazu ermittelt der Schneider mit Hilfe eines Maßbandes, d.h. zweidimensional (2D), abhängig vom Kleidungsstück, bestimmte Abmessungen des Körpers des Kunden, wie z.B. die Rückenlänge, die Armlänge, die Beinlänge, die Taillenlänge, die Taillenweite, die Bauchweite, die Rückenbreite, die Halsweite, die Oberschenkelweite, die Oberweite etc. Seit der Erfindung von Schnittmustern vor ca. 150 Jahren wird dann herkömmlicherweise auf Basis dieser linearen Messungen ein bereits vorhandenes Standard-Schnittmuster des anzufertigenden Kleidungsstücks individuell angepasst, um schließlich anhand des angepassten Schnittmusters das individuelle bzw. maßgeschneiderte Kleidungsstück für den Kunden anzufertigen. Das Standard-Schnittmuster beruht z.B. bei Frauen auf einer Schnittkonstruktion einer Körpergröße von 168 Zentimetern und einer Figur mit einem Hüftumfang von etwa 97 cm für Größe 38. Eine individuelle Anpassung des Standard-Schnittmusters erfolgt dann über eine Skalierung der Schnittmusterform nach bestimmten Prinzipien (Gradierung). Das Maßnehmen kann entweder manuell (z.B. durch den Schneider mittels Maßband) oder auch automatisiert unter Verwendung eines Körper-Scanners erfolgen. In beiden Fällen werden lineare Messungen (d.h. Messungen in 2D) am Körper des Kunden durchgeführt bzw. ganz bestimmte, für das Anfertigen des Kleidungsstücks erforderliche Maße ermittelt.

Herkömmliche Verfahren zum Erzeugen eines Schnittmusters (z.B. gemäß "Müller+Sohn") orientieren sich also an bereits vorhandenen Grundschnitten bzw. Basisschnitten für untere Standardgrößen. Diese lassen sich nicht beliebig skalieren, ohne unförmig zu werden oder in der Umsetzung Falten zu werfen. Im Nähprozess muss also mehrfach analog nachjustiert werden, um ein gutes Ergebnis zu erzielen, beispielsweise durch das Verwenden von Abnähern. Weitere Informationen zu solchen herkömmlichen Verfahren finden sich z.B. in dem Buch "Historische Schnitte HAKA: Schnittkonstruktionen" von der Deutschen Bekleidungsakademie München, Rundschau-Verlag Otto G. Königer, 2001, ISBN-13: 978-3929305173, oder in S. Stofer, M. Stiegler und L. Krolopp: "Schnittkonstruktionen für Jacken und Mäntel: M. Müller & Sohn", Rundschau Verlag, 24. Edition, 1994, ISBN-13: 978-3929305036, oder in W. Schierbaum: "Bekleidungs-Lexikon: Mode, Formgestaltung, Schnittkonstruktion, Gradierung, Ausstattung, Zuschnitt, Verarbeitungstechnik, Bügeln, Management u. Marketing", Schiele & Schön, 2. Edition, 1982, ISBN-13: 978-3794903740.

Im Rahmen der vorliegenden Erfindung wurde insbesondere erkannt, dass das herkömmliche Maßnehmen hinsichtlich der Passgenauigkeit in vielen Fällen unzureichend ist, da die herkömmlich durchgeführten Messungen keine Krümmungen (bzw. dreidimensionale Besonderheiten) des menschlichen Körpers berücksichtigen. So können zwar mehrere Personen dieselben linearen Körpermaße (in 2D) haben, wobei jedoch die 3D-Strukturen der jeweiligen Körper (Morphotypen) völlig unterschiedlich sind. Ein mit herkömmlichen Methoden individuell angefertigtes Kleidungsstück würde folglich bei diesen Personen zu unterschiedlichen Passgenauigkeiten führen.

Es ist daher eine Aufgabe der vorliegenden Erfindung, ein Verfahren zum Erstellen eines Schnittmusters eines individuell für einen Kunden anzufertigenden Kleidungsstücks bereitzustellen, auf Basis dessen das Kleidungsstück, insbesondere für Menschen, deren Körperform von Standard-Konfektionsgrößenmodellen abweicht, im Vergleich zu herkömmlichen Methoden noch passgenauer gemacht werden kann. Darüber hinaus ist es eine Aufgabe der vorliegenden Erfindung, eine diesbezügliche Vorrichtung und ein diesbezügliches Computerprogrammprodukt bereitzustellen.

Diese Aufgabe wird durch die Gegenstände der nebengeordneten Ansprüche gelöst. Vorteilhafte Ausführungsformen sind Gegenstand der Unteransprüche.

Ein erster unabhängiger Aspekt zur Lösung der Aufgabe betrifft ein Verfahren zum Bereitstellen zumindest eines Schnittmusters eines individuell für einen Kunden anzufertigenden Kleidungsstücks, umfassend die Schritte:

- Erzeugen eines virtuellen individuellen 3D-Körpermodells des Kunden auf Basis von individuell ermittelten 3D-Körperhülledaten des Kunden und bereitgestellten allgemeinen Skelettdaten;
- Erzeugen eines virtuellen individuellen 3D-Kleidungsstücks auf Basis eines virtuellen 3D-Idealdesigns und des erzeugten virtuellen individuellen 3D-Körpermodells;
- Erzeugen des zumindest einen Schnittmusters durch Abwickeln des virtuellen individuellen 3D-Kleidungsstücks, wobei das Abwickeln des virtuellen individuellen 3D-Kleidungsstücks algorithmisch auf Basis zumindest eines Schnittregelwerks erfolgt.

Insbesondere umfasst das Verfahren einen oder mehrere der folgenden Schritte:

- Bereitstellen von allgemeinen Skelettdaten bzw. eines virtuellen Skeletts;
- Bereitstellen, insbesondere Erzeugen bzw. Ermitteln, von virtuellen individuellen 3D-Körperhülledaten bzw. eines Avatars des Kunden;
- Bereitstellen eines virtuellen 3D-Idealdesigns des anzufertigenden Kleidungsstücks;

Unter "allgemeinen Skelettdaten" (im Folgenden auch "Standard-Skelettdaten" genannt) werden Daten verstanden, die ein allgemeines virtuelles Skelett bzw. ein virtuelles Standard-Skelett repräsentieren. Insbesondere umfassen die Standard-Skelettdaten bzw. umfasst das virtuelle Standard-Skelett virtuelle Knoten bzw. Knotenpunkte. Ferner können die Standard-Skelettdaten virtuelle Verbindungselemente umfassen, mit denen zumindest einige der virtuellen Knoten miteinander verbunden sind. Die virtuellen Knoten stellen Referenz- bzw. Ankerpunkte des virtuellen Skeletts dar. Insbesondere können die virtuellen Knoten z.B. Gelenke des Skeletts und die virtuellen Verbindungselemente Knochen des Skeletts repräsentieren. Vorzugsweise umfasst das virtuelle Standard-Skelett mindestens 24 virtuelle Knoten.

Unter "individuellen 3D-Körperhülledaten" werden Daten zur virtuellen bzw. graphischen Darstellung einer individuellen Körperform bzw. Körperhülle des Kunden verstanden. Dabei können die individuellen 3D-Körperhülledaten zumindest einen (relevanten) Körperabschnitt des Kunden betreffen bzw. darstellen. Die individuellen 3D-Körperhülledaten können also nur einen oder mehrere bestimmte Bereiche oder Abschnitte des Körpers des Kunden betreffen bzw. darstellen, oder aber auch den gesamten Körper des Kunden betreffen bzw. darstellen. Mit Hilfe der individuellen 3D-Körperhülledaten kann ein "Avatar" des Kunden erstellt werden. Ein Avatar ist allgemein eine künstliche Person oder ein virtueller bzw. graphischer Stellvertreter einer realen Person. Entsprechend wird unter einem Avatar im Sinne der vorliegenden Anmeldung eine virtuelle und/oder graphische Darstellung des Kunden verstanden, welche anhand bzw. auf Basis der individuellen 3D-Körperhülledaten ermöglicht wird.

Die 3D-Körperhülledaten des Kunden (einem realen Menschen), können z.B. mit Hilfe eines Smartphones oder Tablets via App erzeugt werden. Sowohl "ARCore" (basierend auf Android) als auch "ARKit" (basierend auf iOS) sind Augmented Reality Frameworks, die beispielsweise zum Erzeugen von 3D-Körperhülledaten verwendet werden können. Bei "ARCore" und "ARKit" handelt es sich also insbesondere um einen Standard-Schnittstellencode zwischen einem Sensor und einer Software bzw. einer App, der dazu genutzt werden kann, um allgemeine Punktewolken der Umgebung aufzunehmen und an die App zurückzugeben. Mit Hilfe dieser Augmented Reality Frameworks können 3D-Strukturen über die in Smartphones verbauten Sensoren erfasst werden. Sie ermöglichen somit ein 3D-Scannen und Rekonstruieren von realen Objekten. Auch die Orientierung der Objekte im Raum kann gemessen werden. Hierfür kommen insbesondere Algorithmen aus dem Bereich Computer Vision in Verbindung mit weiteren Sensoren (z.B. Lagesensor, Orientierungssensor, etc.) zum Einsatz. Alternativ zum Smartphone oder Tablet kann auch ein speziell zum Erzeugen der 3D-Körperhülledaten vorgesehener 3D-Scanner zum Einsatz kommen. Da das Erzeugen der 3D-Körperhülledaten durch ein Scannen des Kunden bzw. von relevanten Bereichen bzw. Körperteilen des Kunden erfolgt, können die 3D-Körperhülledaten auch als 3D-Scandaten bezeichnet werden.

Anstelle von Sensoren ist es auch möglich, über die Videofunktion von Mobilgeräten (Smartphones, Tablets) oder Computern einen 3D-Scan durchzuführen bzw. zu rekonstruieren. Hierzu können insbesondere Techniken zum Einsatz kommen, die neuronale Netze mit einem "deep learning" Ansatz kombinieren und unter dem Begriff "deep networks" bekannt sind. Insbesondere können Ganzkörper-Renderings einer Person bzw. des Kunden für unterschiedliche Körperpositionen (unterschiedliche Posen) erzeugt werden. Dieser Ansatz bildet einen Mittelweg zwischen klassischen, zweidimensionalen Grafik-Bildelementen (Texturkarte der Modelloberfläche) und einem "deep learning" Ansatz, der Bilder von Personen mittels Bild-zu-Bild Übersetzung erzeugt. Ein vollständig gefaltetes Netzwerk (neuronales Netz) kann z.B. verwendet werden, um die Konfiguration von Körpereigenschafts-Punkten der Kamera direkt auf 2D-Texturkoordinaten der einzelnen Pixel im Bildrahmen abzubilden. So können realistische Renderings anhand von Videos mit 3D-Posen trainiert und mit Vordergrundmasken (Bildelementen/Texturdarstellung) kombiniert werden.

Die 3D-Körperhülledaten bzw. Scan-Daten umfassen insbesondere ein sogenanntes "Mesh" (3D-Mesh) bzw. entsprechende Meshdaten (3D-Meshdaten). In der Computergraphik ist ein "Mesh" (welches durch einen Scanvorgang z.B. mit einem 3D-Scanner oder einem Smartphone bzw. Tablet erzeugt werden kann) ein 3D-Netz bzw. Polygonnetz, um Oberflächen eines Objekts zu beschreiben. Ein Mesh bzw. 3D-Oberflächennetz ist somit eine Ansammlung von Knoten, Kanten und Oberflächen, welche die Form eines polyedrischen Objekts definiert. Die Oberflächen bestehen meistens aus Dreiecken ("Triangle-Mesh"), Vierecken oder anderen einfachen konvexen Polygonen. Die 3D-Körperhülledaten bzw. Meshdaten umfassen somit insbesondere virtuelle Dreiecke, virtuelle Vierecke oder andere virtuelle Polygone, welche durch einen Scanvorgang mit einem 3D-Scanner oder einem Smartphone oder Tablet erzeugt werden. Zur Speicherung von Polygonnetzen gibt es eine Reihe bekannter Datenstrukturen, wie z.B. die Knotenliste, die Kantenliste, "Winged Edge" und die doppelt verkettete Kantenliste ("doubly connected halfedge list").

Unter einem "virtuellen 3D-Idealdesign" des anzufertigenden Kleidungsstücks werden insbesondere Design-Daten verstanden, mit denen ein anzufertigendes ideales Kleidungsstück virtuell bzw. graphisch dargestellt werden kann. Insbesondere umfasst das virtuelle 3D-Idealdesign insbesondere Daten zu sämtlichen Eigenschaften (z.B. Form, relative Abmessungen, Material, etc.) und/oder Besonderheiten (z.B. Reißverschluss, Puffärmel, Verzierungen, etc.) des herzustellenden Kleidungsstücks.

Auf Basis der individuell ermittelten 3D-Körperhülledaten des Kunden und der vorgegebenen allgemeinen Skelettdaten wird ein virtuelles individuelles 3D-Körpermodell des Kunden erzeugt. Insbesondere werden die ermittelten 3D-Körperhülledaten des Kunden mit den vorgegebenen allgemeinen Skelettdaten verknüpft, um somit das virtuelle individuelle 3D-Körpermodell bzw. entsprechende individuelle 3D-Körpermodelldaten zu erzeugen. Die Verknüpfung kann z.B. mit Hilfe eines neuronalen Netzes erfolgen, welches eine solche Verknüpfung erlernt hat. Bildlich gesprochen wird das virtuelle Skelett in die ermittelte virtuelle 3D-Körperhülle des Kunden bzw. in den durchgeführten Scan gelegt bzw. platziert.

Bei dem 3D-Scanvorgang wird insbesondere eine 3D-Punktewolke erzeugt (in der virtuellen Repräsentation der Daten wird z.B. ein trianguliertes Mesh bzw. Netz visualisiert). Da während des Scanvorgangs Fehlstellen oder Löcher im Scan entstehen können (durch Verdeckung z.B. im Achselbereich) und an diesen Stellen keine Datenpunkte erfasst werden, ist es wünschenswert, eine geschlossene Oberfläche herzustellen. Hierfür können die Scan-Daten mit einem idealen 3D-Modell (Avatar) virtuell aufbereitet werden. Dabei kann zuerst der 3D-Scan mit dem Avatar registriert werden (d.h. der Scan und der Avatar werden lokal übereinander gelegt und somit "gemappt" bzw. "gematcht"), so dass Lage und Orientierung von 3D-Scan und Avatar im Raum im Wesentlichen identisch sind. Eine mögliche Ausführung der Registrierung der Scandaten mit einem idealen Mesh ist z.B. durch die Verwendung eines virtuellen Skeletts, welches anhand von Ankerpunkten oder mit dem sogenannten "iterative closest point" (ICP) sowohl über den 3D-Scan als auch über den Avatar gelegt wird, möglich. Lokal können durch Volumenexpansion und/oder Volumenverkleinerung des Avatars dessen Oberfläche auf die Oberfläche des 3D-Scans gelegt werden. Durch einen "Inside-Out"-Test kann geprüft werden, wie sich der Avatar dem 3D-Scan annähern muss (insbesondere durch Expansion oder Verkleinerung des Umfangs), um einen deckungsgleichen Überlapp zu erreichen. Mit anderen Worten können die individuellen 3D-Körpermodelldaten bzw. 3D-Körperhülledaten (3D-Scandaten) auf den Avatar, insbesondere mit Hilfe der allgemeinen Skelettdaten, projiziert werden. Im Ergebnis ist vorzugsweise die virtuelle Oberfläche des virtuellen idealen Avatars im Wesentlichen deckungsgleich mit der virtuellen Oberfläche des originalen (erfassten) 3D-Scans, wobei etwaige Löcher und Fehlstellen durch den idealen Avatar vorzugsweise ersetzt wurden. Somit ist vorteilhafterweise nur eine mittlere 3D-Scanqualität mit Löchern die Voraussetzung, um in breiter Masse mit einer Vielzahl von unterschiedlichen 3D-Körperscans einheitlich umzugehen, bzw. um eine einheitliche und automatisierte Weiterverarbeitung der Daten (mittels Algorithmus) zu gewährleisten. Der Vorgang bzw. die Schritte, mit dem bzw. denen ein Übereinanderlegen und/oder ein (insbesondere im Wesentlichen deckungsgleicher) Überlapp zweier Datensätze bzw. der virtuellen Darstellungen (insbesondere der virtuellen Oberflächen) dieser Datensätze (z.B. eines 3D-Scandatensatzes und eines virtuellen individuellen 3D-Körperhülledatensatzes bzw. Avatars) erreicht bzw. erzeugt wird, wird im Sinne der vorliegenden Beschreibung allgemein als "Projektion" bezeichnet.

Auf Basis des virtuellen 3D-Idealdesigns und des erzeugten virtuellen individuellen 3D-Körpermodells wird ein virtuelles individuelles 3D-Kleidungsstück erzeugt. Insbesondere erfolgt dies dadurch, dass das virtuelle 3D-Idealdesign auf das virtuelle 3D-Körpermodell bzw. auf die Hülle oder Oberfläche des virtuellen 3D-Körpermodells projiziert wird. Für die Projektion (im Rahmen dieser Beschreibung auch als "Übertragung" oder "Mapping" bezeichnet), d.h. allgemein dem "Übereinanderlegen" zweier Datensätze bzw. dem insbesondere deckungsgleichen Überlappen der virtuellen Darstellungen bzw. Oberflächen dieser Datensätze (hier also das virtuelle 3D-Idealdesign und das virtuelle 3D-Körpermodell) können analoge Schritte wie auch im Zusammenhang mit der Projektion eines 3D-Scandatensatzes und eines virtuellen individuellen 3D-Körperhülledatensatzes (Avatars) beschrieben, ausgeführt werden. Insbesondere können Ankerpunkte bzw. Referenzpunkte (z.B. eines virtuellen Skeletts) verwendet werden. Alternativ oder zusätzlich kann eine Volumenexpansion und/oder Volumenverkleinerung zumindest einer der beiden virtuellen Darstellungen vorgenommen werden. Alternativ oder zusätzlich kann auch ein "Inside-Out"-Test durchgeführt werden.

Entsprechend dem "virtuellen 3D-Idealdesign", welches insbesondere Design-Daten repräsentiert, mit denen ein anzufertigendes ideales Kleidungsstück virtuell bzw. graphisch dargestellt werden kann, werden unter einem "virtuellen individuellen 3D-Kleidungsstück" 3D-Kleidungsstück-Daten verstanden, mit denen ein 3D-Kleidungsstück virtuell bzw. graphisch dargestellt werden kann. Insbesondere wird das "virtuelle individuelle 3D-Kleidungsstück" durch die 3D-Kleidungsstück-Daten repräsentiert. Das "virtuelle individuelle 3D-Kleidungsstück" bzw. die 3D-Kleidungsstück-Daten dient bzw. dienen somit insbesondere der virtuellen Veranschaulichung des anzufertigenden individuellen Kleidungsstücks. Zudem bildet das erzeugte "virtuelle individuelle 3D-Kleidungsstück" die Grundlage für das Bereitstellen des zumindest einen 2D-Schnittmusters. Das "virtuelle individuelle 3D-Kleidungsstück" umfasst also sämtliche Informationen bzw. Daten aus dem virtuellen individuellen 3D-Körpermodell, welche für eine Abwicklung bzw. Übersetzung in ein zweidimensionales Schnittmuster notwendig sind.

Das zumindest eine Schnittmuster wird schließlich durch Abwickeln des virtuellen individuellen 3D-Kleidungsstücks erzeugt. Der Begriff "Abwickeln" bedeutet hierbei ein mathematisches Umwandeln bzw. ein Skalieren von einer 3D-Darstellung in eine 2D-Darstellung. Das Abwickeln des virtuellen individuellen 3D-Kleidungsstücks erfolgt mittels eines Algorithmus auf Basis zumindest eines, insbesondere vordefinierten bzw. vorgegebenen, Schnittregelwerks. Insbesondere umfasst das Abwickeln die Generierung eines oder mehrerer Schnitte bzw. Schnittlinien auf Basis des zumindest einen Schnittregelwerks.

Vorzugsweise umfasst das Verfahren auch eine Ausgabe des zumindest einen Schnittmusters bzw. eines davon ausgewählten Schnittmusters, beispielsweise als Datei, als Ausdruck auf Papier oder durch eine direkte Datenübertragung an einen Schneidplotter und Schneiden eines Stoffes mittels des Schneidplotters. Insbesondere ist das Verfahren somit auf ein Herstellen eines für einen Kunden individuellen Kleidungsstücks gerichtet und umfasst entsprechend den Schritt eines Herstellens des Kleidungsstücks.

Mit Hilfe des erfindungsgemäßen Verfahrens kann das für einen Kunden individuell anzufertigende Kleidungsstück im Vergleich zu herkömmlichen Methoden noch einfacher hergestellt und zudem noch passgenauer gemacht werden. Somit bietet die vorliegende Erfindung gerade für Kunden, deren Körperform von Standard-Konfektionsgrößen abweicht, signifikante Vorteile gegenüber herkömmlichen Verfahren zur Schnittmustererstellung bzw. Bekleidungsherstellung. Bekannte Verfahren zur virtuellen Abwicklung bzw. Segmentierung von 3D-Oberflächen basieren vielmehr auf einem visuellen Realismus. Das heißt, dass sie nicht in einem physiologischen Sinne realistische Modellierungen sind, sondern in einem synthetisierten, virtuellen Szenario auf einer repräsentativen, visuellen Ebene basieren. Es wird dort also nicht von realen, sondern von virtuell erzeugten Oberflächen ausgegangen. Das erfindungsgemäße Verfahren hingegen dient mit Hilfe der individuellen 3D-Körperhülledaten bzw. 3D-Scandaten zur Modellierung echter, realer, physikalischer Körper. Insbesondere können mit Hilfe des erfindungsgemäßen Verfahrens Schnittlinien für Bekleidungsstücke anhand der virtuellen Körpertopologie des Kunden erzeugt werden. Das erfindungsgemäße körperzentrierte Verfahren zur Herstellung von Schnittmustern trifft keine Vorannahmen von analogen, herkömmlichen Ansätzen und Methoden zur Erzeugung von Schnittmustern. Insbesondere bietet das erfindungsgemäße Verfahren eine Übertragbarkeit der virtuellen Abwicklung von Schnittmustern auf die Realität.

Im Vergleich zum Ansatz der klassischen 2D-Schnittmustererstellung, bei dem eine lineare Vermessung des dreidimensionalen Körpers des Kunden und eine Übersetzung in standardisierte, insbesondere symmetrisch gespiegelte, 2D-Schnittmuster Standardgrößenmodelle erfolgt, werden erfindungsgemäß mittels eines persönlichen Avatars kundenspezifische Schnittmuster direkt in 3D erstellt. Diese kundenspezifischen Schnittmuster in 3D werden schließlich zur Herstellung des Kleidungsstückes in 2D Schnittmusterflächen abgewickelt. Insbesondere ist es im Rahmen der vorliegenden Erfindung möglich, die ermittelten 3D-Körperhülledaten bzw. den 3D-Scan algorithmisch in einen sich physisch bewegenden, gegebenenfalls auch asymmetrischen, Avatar umzuwandeln. Die persönlichen, in 3D erzeugten, Schnittmuster können dann vorteilhafterweise direkt auf dem Avatar (oder einer identischen Kopie hiervon) generiert werden.

Zum Erzeugen des virtuellen individuellen 3D-Körpermodells des Kunden kann vorzugsweise ein virtuelles Referenzmodell bzw. Topologiemodell in Form eines (digitalen) idealen 3D-Körpermodells vorliegen oder bereitgestellt werden. In diesem virtuellen idealen 3D-Körpermodell kann ein virtuelles Skelett mit Ankerpunkten bzw. Knotenpunkten eingepasst sein. Mit anderen Worten kann das virtuelle ideale 3D-Körpermodell mit den vorgegebenen allgemeinen Skelettdaten verknüpft sein. Die gescannten 3D-Körperhülledaten des Kunden können auf eine Plattform hochgeladen werden. Im Backend können die ermittelten 3D-Körperhülledaten des Kunden ebenfalls mit den vorgegebenen allgemeinen Skelettdaten, d.h. mit einem virtuellen Skelett, welches Ankerpunkte bzw. Knotenpunkte aufweist, verknüpft werden. Anschließend können die ermittelten 3D-Körperhülledaten mittels der Skelettdaten mit dem idealen virtuellen Referenzmodell verknüpft. Mit anderen Worten können die ermittelten 3D-Körperhülledaten mittels der Skelettdaten auf das ideale virtuelle Referenzmodell übertragen (projiziert bzw. gemappt) werden. Dabei können die Körperproportionen der Scandaten durch die Ankerpunkte bzw. Knotenpunkte übernommen und das Referenzmodell kann an die Kundendaten des eingescannten 3D-Körpermodells angepasst werden. Insbesondere kann das ideale Referenzmodell deformiert bzw. verformt (z.B. expandiert oder geschrumpft) werden bis dieses deckungsgleich mit den 3D-Körperhülledaten des Kunden ist. Das Übertragen der 3D-Scan Daten des Kunden auf ein deformiertes ideales Referenzmodell ist hilfreich, um eine ideale Weiterverarbeitung des Meshmodells zu gewährleisten. Die Übertragung kann z.B. mit Hilfe eines neuronalen Netzes erfolgen, welches die Übertragung gelernt hat. Vorzugsweise wird im Anschluss nur noch mit dem deformierten idealen Referenzmodell - d.h. einem erstellten Avatar des Kunden - weitergearbeitet.

In einer bevorzugten Ausführungsform erfolgt das Erzeugen eines virtuellen individuellen 3D-Körpermodells somit nicht nur auf Basis von individuell ermittelten 3D-Körperhülledaten des Kunden und allgemeinen Skelettdaten, sondern ferner auf Basis von bereitgestellten allgemeinen 3D-Körperhülledaten bzw. eines allgemeinen 3D-Körpermodells. Das allgemeine 3D-Körpermodell wird im Rahmen dieser Beschreibung auch als virtuelles Referenzmodell oder Topologiemodell bezeichnet.

Unter den "allgemeinen 3D-Körperhülledaten" werden 3D-Körperhülledaten eines idealen Referenzmodells verstanden, welche insbesondere auf Basis eines Standard-Avatarmeshs gewonnen wurden. Beispielsweise können die allgemeinen 3D-Körperhülledaten aus einem idealen Scan eines realen oder künstlichen Models gewonnen werden. Der Begriff "ideal" bedeutet in diesem Zusammenhang insbesondere, dass ein ideales Referenzmodell eine hohe bzw. die höchstmögliche Qualität (insbesondere keine Selbstschnitte bzw. 2-Mannigfaltigkeit, keine Löcher in der Mesh-Oberfläche, keine Bewegungsfehler und eine gleichmässige Auflösung des Meshes) aufweist. Insbesondere weisen die bei einem idealen Referenzmodell erhaltenen (idealen) Scan-Daten bzw. (idealen) 3D-Körperhülledaten keine Fehler und/oder Fehlstellen bzw. Löcher auf. Die idealen Scan-Daten weisen insbesondere eine hohe bzw. höchstmögliche Präzision des 3D-Meshes (z.B. einer triangulierten Oberfläche) auf. Auch die "allgemeinen 3D-Körperhülledaten" des virtuellen Referenzmodells sind solche ideale Daten.

Wie die individuellen 3D-Körperhülledaten können auch die allgemeinen 3D-Körperhülledaten mit den bereitgestellten allgemeinen Skelettdaten verknüpft bzw. übertragen und/oder gemappt sein. Mit anderen Worten kann in den allgemeinen 3D-Körperhülledaten des Referenzmodells das virtuelle Skelett integriert sein. Die allgemeinen 3D-Körperhülledaten zusammen mit dem integrierten virtuellen Skelett bilden ein allgemeines 3D-Körpermodell (Referenzmodell).

Vorzugsweise sind bzw. werden sowohl die individuellen 3D-Körperhülledaten als auch die allgemeinen 3D-Körperhülledaten jeweils mit den allgemeinen Skelettdaten verknüpft. Somit ist es vorteilhafterweise möglich, über die gemeinsamen allgemeinen Skelettdaten (insbesondere über die Ankerpunkte der Skelettdaten) die individuellen 3D-Körperhülledaten mit den allgemeinen 3D-Körperhülledaten zu verknüpfen bzw. zu mappen. Durch diese Verknüpfung können Fehler, Fehlstellen bzw. Löcher der ermittelten individuellen 3D-Körperhülledaten korrigiert werden. Insbesondere kann durch eine Projektion des allgemeinen Idealscans bzw. der mit den allgemeinen Skelettdaten verknüpften allgemeinen 3D-Körperhülledaten auf die individuellen 3D-Körperhülledaten ein (virtuelles) modifiziertes individuelles 3D-Körpermodell des Kunden erzeugt werden. Dieses modifizierte individuelle 3D-Körpermodell bzw. der damit einhergehende modifizierte Avatar des Kunden genügt den Ansprüchen an die Weiterverarbeitung, insbesondere an die algorithmische Abwicklung. Mit Hilfe von allgemeinen 3D-Körperhülledaten bzw. eines allgemeines 3D-Körpermodells kann also ein im Vergleich zum erzeugten individuellen 3D-Körpermodell ein qualitativ höherwertiges modifiziertes individuelles 3D-Körpermodell generiert werden.

Die Verwendung von allgemeinen 3D-Körperhülledaten bzw. eines allgemeines 3D-Körpermodells zum Erzeugen eines qualitativ hohen bzw. höherwertigen modifizierten individuellen 3D-Körpermodells ermöglicht es vorteilhafterweise, dass die ermittelten individuellen 3D-Körperhülledaten bzw. individuellen Scan-Daten nur eine geringe oder mittlere Qualität aufweisen müssen. Dies mindert somit die Anforderungen an den Scanvorgang, der somit auch mit Hilfe eines handelsüblichen Smartphones oder Tablets durchführbar ist.

In einer weiteren bevorzugten Ausführungsform erfolgt das Abwickeln des virtuellen individuellen 3D-Kleidungsstücks auf Basis eines ersten und zweiten Schnittregelwerks. Dabei berücksichtigt das erste Schnittregelwerk (insbesondere vom Designer und/oder Kunden) festgelegte bzw. vorgegebene Stilelemente. Das zweite Schnittregelwerk berücksichtigt (insbesondere vom Designer und/oder Kunden) festgelegte bzw. vorgegebene Wirkungselemente. Unter "Stilelemente" werden insbesondere sogenannte "Add-ons" eines Bekleidungsstücks verstanden, wie z.B. Puffärmel, Reißverschluss, etc. Unter "Wirkungselemente" werden insbesondere bestimmte Wünsche des Designers oder Kunden verstanden, wie z.B. breite Schultern, schmale Taille, Brust kaschieren, etc. Vorzugsweise wird das erste Schnittregelwerk vor dem zweiten Schnittregelwerk angewendet.

In einer weiteren bevorzugten Ausführungsform erfolgt das Abwickeln des virtuellen individuellen 3D-Kleidungsstücks durch aufeinanderfolgendes Anwenden des ersten Schnittregelwerks und des zweiten Schnittregelwerks, insbesondere erfolgt das Abwickeln des virtuellen individuellen 3D-Kleidungsstücks ferner auf Basis eines automatisierten Abwicklungsalgorithmus unter Verwendung einer (zu minimierenden) Zielfunktion erfolgt.

Vorzugsweise umfasst das Abwickeln des virtuellen individuellen 3D-Kleidungsstücks, in dieser Reihenfolge, ein Generieren eines oder mehrerer etwaiger Schnitte bzw. Schnittlinien auf Basis des ersten Schnittregelwerks, ein Generieren eines oder mehrerer etwaiger Schnitte bzw. Schnittlinien auf Basis des zweiten Schnittregelwerks, und ein Generieren eines oder mehrerer etwaiger Schnitte auf Basis eines automatisierten Abwicklungsalgorithmus. Unter "etwaiger Schnitte" wird verstanden, dass kein Schnitt, ein Schnitt oder mehrere Schnitte unter Anwendung des jeweiligen Schnittregelwerks generiert werden können. Die Schnittregelwerke sind vorzugsweise derart konfiguriert bzw. definiert, dass möglichst wenig Schnitte generiert werden.

Im Rahmen der Erfindung hat sich herausgestellt, dass unter Verwendung zweier Schnittregelwerke, wobei ein erstes Schnittregelwerk vorgegebene Stilelemente und ein zweites Schnittregelwerk vorgegebene Wirkungselemente berücksichtigt, die Abwicklung bzw. das Setzen von Schnitten besonders effizient und materialeinsparend durchgeführt werden kann, insbesondere wenn das erste Schnittregelwerk vor dem zweiten Schnittregelwerk angewendet wird.

In einer weiteren bevorzugten Ausführungsform umfasst das Abwickeln des virtuellen individuellen 3D-Kleidungsstücks bzw. der automatisierte Abwicklungsalgorithmus ein Minimieren einer Zielfunktion. Vorzugsweise erfolgt das Minimieren der Zielfunktion iterativ. Weiter vorzugsweise weist die Zielfunktion einen oder mehrere Energieterme auf. Die Zielfunktion umfasst insbesondere mehrere Energieterme, welche verschiedene Aspekte der Schnittmustererzeugung bewerten.

In einer weiteren bevorzugten Ausführungsform umfasst die Zielfunktion einen Verzerrungs-Energieterm. Alternativ oder zusätzlich umfasst die Zielfunktion einen Längenregularisierungs-Energieterm. Alternativ oder zusätzlich umfasst die Zielfunktion einen Spannungs-Energieterm. Vorzugsweise sind die Energieterme gewichtet, d.h. jeweils mit einem Gewichtungsfaktor versehen. Die Zielfunktion $E(p)$ kann mathematisch insbesondere wie folgt dargestellt werden:

$$E(p) = \alpha E_D(p) + \beta E_L(p) + \gamma E_S(p),$$

wobei $E_D(p)$ den Verzerrungs-Energieterm, $E_L(p)$ den Längenregularisierungs-Energieterm, $E_S(p)$ den Spannungs-Energieterm und $\alpha, \beta, \gamma > 0$ die zu den jeweiligen Energietermen zugehörigen Gewichtfaktoren darstellen. Mit p ist die Menge aller (aktuellen) Schnittlinien bzw. Schnittkurven bezeichnet, die vorzugsweise iterativ ausgerichtet werden. Mit anderen Worten werden vorzugsweise die Schnittlinien in einem iterativen Verfahren optimiert. Dabei wird von einer ersten Initialisierung ausgegangen und nach jedem Iterationsschritt die Zielfunktion (z.B. bezüglich des Erreichens von kürzeren Schnittlinien und/oder weniger Verzerrung der Oberfläche, etc.) bewertet. Die Position jeder Schnittlinie wird nach jeder Iteration bzw. nach jedem Iterationsschritt neu (generativ) ausgerichtet.

Zweifach gekrümmte 3D-Flächen lassen sich nie ohne Verzerrung auf eine 2D-Ebene projizieren (siehe z.B. Weltkarte). Vorhandene Abwicklungsverfahren für Körper und Objekte bieten unterschiedliche Verzerrungsarten mit Vor- und Nachteilen an. Z.B. ist bei der Weltkarte die sogenannte Mercator-Projektion oder Peters-Projektion bekannt. Um ein Verfahren für Schnittmuster zu entwickeln, muss die Verzerrung möglichst gering gehalten werden bei passender Größe der Schnittteile. Dies ist notwendig, um eine Verarbeitung ohne Falten (z.B. Querfalten, ungeordnete Falten) sicherzustellen.

Der Grad der Verzerrung wird mit dem Verzerrungs-Energieterm $E_D(p)$ beschrieben bzw. bewertet.

Insbesondere ist $E_D(p) := \int_M u^2 dA$ die Verzerrungsenergie (Spannung), wobei $u := M_p \to \Re$ der logarithmische Verzerrungsfaktor der konformen Abbildung ist und dabei die einheitenlose Hencky Verzerrung widerspiegelt. $E_D(p)$ ist so gewählt, dass es den Verzerrungsfaktor bzw. die Verzerrungsenergie über eine Oberfläche M aufsummiert bzw. integriert. Durch eine Minimierung des Verzerrungs-Energieterms $E_D(p)$ kann somit auch die Verzerrung minimiert werden.

Die Auswahl des Stoffes gibt vor, wie stark dieser gedehnt werden kann. Somit muss dafür gesorgt werden, dass die Obergrenze für die Spannung des Stoffes nicht überschritten wird. Jedoch ist generell eine möglichst geringe Verzerrung erstrebenswert. Dabei wird nach jedem Iterationsschritt die Zielfunktion $E(p)$ minimiert.

Der Längenregularisierungs-Energieterm $E_L(p)$ bzw. dessen Minimierung sorgt dafür, dass die Schnittkanten nicht zu lange werden und führt zeitgleich eine Glättung des Schnittverlaufs durch. Dadurch, dass die Kanten kurz gehalten werden, entstehen weniger (unnötige) Kurven im Schnitt. Dies ist nötig, damit die Produktion des Kleidungsstück nicht zu kompliziert wird (Radius Naht, praktisches Zusammenfügen von Schnittteilen). Unter Glättung wird in diesem Zusammenhang verstanden, dass die Linien möglichst wenig stark geschwungen (kurvig mit kleinem Radius) sind. Insbesondere ist

$$E_L(p) := \frac{1}{2} \int_p ds$$

, wobei $ds$ die Bogenlänge der einzelnen Schnittkurven ist. Die Glättung kann durch eine Minimierung des Energieterms (curve shortening flow) erfolgen. Bildlich gesprochen passiert hier das gleiche wie bei der Spannung eines Seils, welches zuvor lose war. Durch die Spannung des Seils hängt das Seil weniger durch und die Verlaufslinie des Seils ist glatter bzw. geradliniger.

Mit $E_S(p)$ bzw. dessen Minimierung wird sichergestellt, dass die Spannung aller Schnittteile einer Schnittkante kompatibel zueinander ist. Insbesondere wird durch $E_S(p) := \int_p (F_{diff})^2$ mittels der Methode der kleinsten Quadrate die Differenz der Deformationsgradienten $F_{diff}$ links und rechts jeder Schnittkante ermittelt bzw. gemessen und demzufolge während der Optimierung minimiert. Insbesondere wird der Deformationsgradient entlang jeder Schnittkante ausgerechnet und mit der Methode der kleinsten Quadrate jeweils links und rechts der Schnittkante minimiert. Der Deformationsgradient gibt an, wie stark sich etwas lokal an einem Punkt verformt. Die Verformung besteht im Wesentlichen aus Streckung und Rotation. Ist die Streckung gering und die Verformung gleich orientiert (Rotation in gleiche Richtung), dann ist auch der Deformationsgradient klein. Daraus folgt, dass die Nähte links und rechts der Nahtstelle kompatibel zueinander sind, da die Streckung/Verzerrung und Rotation links und rechts der Nahtstelle klein und annähernd kompatibel zueinander sind.

Weiterhin wird vorzugsweise sichergestellt, dass die generierten Flächensegmente eine ausreichend gerade Kante besitzen. Dies kann unter Zuhilfenahme des eindimensionalen Sonderfalls des mittleren Krümmungsflusses geschehen, dem sogenannten "curve shortening flow". Mit Hilfe des "curve shortening flow", also dem mittleren Krümmungsfluss, kann die maximale Krümmung der Schnittkurve minimiert werden. Dadurch findet eine Glättung der Schnittkurve statt und die Bogenlänge der Schnittkante wird geringer und glatter. Weiterhin wird der "curve shortening flow" sowie das im Rahmen der Erfindung eingeführte Maß zur Bestimmung der Verzerrung links und rechts einer Stoffkante mit beachtet für die Optimierung.

Bei der Schnittmustergenerierung wird vorzugsweise basierend auf $E(p_{n-l})$ der Verlauf der Schnittlinien $p_n$ schrittweise optimiert bis die Zielfunktion $E(p)$ einen Grenzwert unterschreitet und somit eine ausreichende Güte des Schnittmusters erreicht ist. Dabei bezeichnet $p_n$ die Menge aller Schnittlinien im n-ten Iterationsschritt und entsprechend $p_{n-1}$ die Menge aller Schnittlinien im (n-1)-ten Iterationsschritt.

Vor der Initialisierung und iterativen Minimierung der Zielfunktion können bestimmte Obergrenzen (insbesondere für die Verzerrung und/oder für die Größe der zu erzeugenden Schnittteile) und/oder eine Stilrichtung vorgegeben werden.

Durch das Setzen einer Obergrenze der Verzerrung sowie durch den vom Nutzer gewählte Stil hat der Nutzer Einfluss auf die Gewichtung der verschiedenen Optimierungsterme. Textilien sind unterschiedlich dehnfähig. Außerdem sind verschiedene Stilrichtungen möglich. So kann die erste Initialisierung unterschiedliche Ziele verfolgen. Zum Beispiel zielt ein sogenanntes "Zero Waste" Schnittmuster (ohne Stoffverschnitt / Abfall) darauf ab, möglichst kleine und gleichmäßige Patches (ähnlich einem Fußballmuster) zu erzeugen. Um dies zu erreichen, wird z.B. die Längenregularisierung stärker als die Verzerrungsenergie gewichtet. Dies führt zu kürzeren und gleichmäßigeren Schnittkanten.

Die Wahl einer Obergrenze für die Größe (Länge und Breite) der zu erzeugenden Schnittteile hat keine ästhetische Bewandtnis, sondern dient lediglich der Sicherstellung, dass das Kleidungsstück auch tatsächlich gefertigt werden kann. Typischerweise besitzen Stoffballen eine Breite von 1.20 m - 1.40 m, was somit einen limitierender Faktor darstellt. Deshalb beachtet der Optimierungsterm diese Obergrenze und sorgt durch eine Neugewichtung dafür, dass diese Obergrenze eingehalten wird. Sobald die Obergrenze überschritten wird (z.B. weil die Kante entlang der kurzen Seite größer ist als die Breite der Stoffbahn), dann muss eine neue Schnittkante eingefügt werden. Nachdem so viele Schnittkanten eingefügt wurden, dass sichergestellt ist, dass das Kleidungsstück hinsichtlich des vorgegebenen Stoffballens auch tatsächlich gefertigt werden kann (d.h. wenn die gesetzte Obergrenze eingehalten wird), kann auf Basis sämtlicher eingefügter Schnittkanten die Initialisierung für die iterative Minimierung der Zielfunktion vorgenommen werden.

In einer weiteren bevorzugten Ausführungsform erfolgt das Erzeugen eines virtuellen individuellen 3D-Kleidungsstücks bzw. das Bereitstellen eines virtuellen 3D-Idealdesigns auf Basis von Benutzervorgaben. Insbesondere umfasst das Erzeugen eines virtuellen individuellen 3D-Kleidungsstücks bzw. das Bereitstellen eines virtuellen 3D-Idealdesigns ein Auswählen aus einem vorgegebenen BekleidungsKatalog, einem vorgegebenen Stilelemente-Katalog, einem vorgegebenen Wirkungselemente-Katalog und/oder einem vorgegebenen Material-Katalog. Das Auswählen kann z.B. in Form einer Benutzereingabe erfolgen.

In einer weiteren bevorzugten Ausführungsform umfasst das Erzeugen eines virtuellen individuellen 3D-Kleidungsstücks den Schritt:

-- Vergrößern des Volumens des virtuellen individuellen 3D-Körpermodells bzw. Avatars (insbesondere einer identischen Kopie hiervon) in Abhängigkeit der Art des Bekleidungsstücks und/oder in Abhängigkeit eines ausgewählten Materials und/oder in Abhängigkeit einer simulierten Bewegung (bzw. in Abhängigkeit verschiedener simulierter Posen) des virtuellen individuellen 3D-Körpermodells.

Insbesondere können verschiedene Posen bzw. Körperpositionen des virtuellen individuellen 3D-Körpermodells (Avatar) und/oder eine Bewegung des virtuellen individuellen 3D-Körpermodells auf Basis der ermittelten 3D-Körperhülledaten (3D-Scan) simuliert werden. Insbesondere können verschiedene Posen bzw. Körperpositionen des virtuellen individuellen 3D-Körpermodells (Avatar) und/oder eine Bewegung des virtuellen individuellen 3D-Körpermodells auf Basis der ermittelten 3D-Körperhülledaten (3D-Scan) simuliert werden. Auf Basis einer solchen Simulation können z.B. eine störende Dehnung, eine störende Spannung und/oder ein störender Faltenwurf des individuellen 3D-Kleidungsstückes, die durch eine bestimmte Bewegung und/oder Pose des Kunden auftreten, erkannt bzw. festgestellt werden. Das virtuelle individuelle 3D-Körpermodell bietet die Grundlage für die Erzeugung des virtuellen, individuellen 3D-Kleidungsstücks. Das virtuelle individuelle 3D-Kleidungsstück kann z.B. erzeugt werden, indem man eine Kopie des 3D-Körpermodells anfertigt und bearbeitet, im Sinne eines virtuellen Zuschnitts basierend auf dem virtuellen 3D-Idealdesign. Insbesondere kann eine Textursimulation eines Textils (Stoffsimulation) in Form von physikalischen Elastizitätsmodul-Werten (d.h. Werten, welche z.B. die Dehnfähigkeit und/oder Rigidität eines Textils angeben) auf das virtuelle individuelle 3D-Kleidungsstück gelegt werden, d.h. die 3D-Kleidungsstück-Daten können um solche Elastizitätsmodul-Werte ergänzt werden.

Aus einer Kombination von physikalischen Elastizitätsmodul-Werten des Textils und Bewegungsabläufen des 3D-Körpermodells können Dehnungen und Spannungen im Kleidungsstück simuliert werden. Vorzugsweise werden solchen Dehnungen und Spannungen für das anzufertigende Kleidungsstück bzw. das anzufertigende Schnittmuster in Form von Bewegungsspielräumen zwischen dem virtuellen individuellen 3D-Körpermodell und dem virtuellen individuellen 3D-Kleidungsstück berücksichtigt. So kann z.B. auf Basis einer gezielten, nutzerangepassten Bewegung eine Verformung der 3D-Körpermodelldaten (bzw. der Kopie hiervon) hervorgerufen werden. Diese virtuelle Verformung kann z.B. eine Grundlage für das Berücksichtigen bzw. Erstellen von Bewegungsfreiheit in der Realität sein. Die virtuelle Verformung kann in die 3D-Kleidungststück-Daten eingepflegt werden (z.B. als Kopie). Mit anderen Worten können Daten zur virtuellen Verformung zu den 3D-Kleidungststück-Daten hinzugefügt werden.

Insbesondere können bestimmte Abstände des Kleidungsstücks zum Körper des Kunden dynamisch durch eine virtuelle Bewegung (bzw. Bewegungssimulation) der Arme, des Rumpfes und/oder der Beine, etc. ermittelt werden. Somit ist es vorteilhafterweise möglich, für den Kunden einen individuell gewünschten Bewegungsspielraum zu gewährleisten und folglich den Tragekomfort des herzustellenden individuellen Kleidungsstücks für den Kunden zu optimieren. Insbesondere kann auf diese Weise ein vorgegebener, vorzugebender oder auswählbarer (d.h. gewünschter) Bewegungsspielraum des Avatars bzw. einer realen Person (Kunde) realisiert werden. Mit anderen Worten können vorgegebene, vorzugebende oder auswählbare (d.h. gewünschte) Bewegungen des Avatars bzw. einer realen Person (Kunde) beim Tragen des herzustellenden individuellen Kleidungsstücks ermöglicht werden.

Um die Genauigkeit einer Bewegungssimulation des virtuellen individuellen 3D-Körpermodells zu erhöhen, kann das Ermitteln von 3D-Körperhülledaten des Kunden ein Ermitteln von 3D-Körperhülledaten des Kunden jeweils in verschiedenen Posen (z.B. hängende Arme, hochgestreckte Arme, zur Seite gestreckte Arme, nach vorne gestreckte Arme, angewinkelte Arme, hochgehobener Fuß, etc.) des Kunden umfassen. Grundsätzlich ist es jedoch möglich, dass die 3D-Körperhülledaten des Kunden nur für eine Pose (z.B. eine vorgegebene bzw. ausgewählte Standardpose) ermittelt werden und zumindest eine weitere Pose und/oder eine Bewegung des virtuellen individuellen 3D-Körpermodells (Avatars) des Kunden rein computerbasiert bzw. unter Verwendung eines Algorithmus simuliert werden. Zur Simulation zumindest weiterer Posen und/oder einer Bewegung des Avatars auf Basis von 3D-Körperhülledaten des Kunden können bekannte computerimplementierte Verfahren, die z.B. auf einem Deformations-Transfer (siehe z.B. Robert W. Sumner and Jovan Popovic: "Deformation transfer for triangle meshes", ACM Transactions on Graphics, August 2004, Seiten 399-405, DOI: https://doi.org/10.1145/1015706.1015736), auf eine "Poisson shape interpolation" (siehe z.B. Dong Xu et al: "Poisson shape interpolation", Graphical Models, Volume 68, Issue 3, 2006, Seiten 268-281, ISSN 1524-0703, https://doi.org/10.1016/j.gmod.2006.03.001), und/oder auf andere geeignete Interpolationsalgorithmen beruhen, verwendet werden.

Es kann das Volumen des individuellen 3D-Körpermodells oder einer (identischen) Kopie davon vergrößert werden. Das veränderte bzw. vergrößerte individuelle 3D-Körpermodell bzw. die Kopie davon kann dann über das 3D-Idealdesign angepasst werden. Im Ergebnis ergibt sich insbesondere das virtuelle 3D-Kleidungsstück, welches schließlich durch Abwicklung und einer optionalen Produktionsanpassung in ein 2D-Schnittmuster zerlegt werden kann. Dabei können gegebenenfalls weitere Schnittlinien generiert werden.

In einer weiteren bevorzugten Ausführungsform umfasst das Erzeugen eines virtuellen individuellen 3D-Kleidungsstücks ferner den Schritt:

-- Projizieren des virtuellen 3D-Idealdesigns auf die Hülle bzw. Oberfläche des vergrößerten virtuellen individuellen 3D-Körpermodells bzw. Avatars.

Insbesondere durch die Ankerpunkte bzw. Knotenpunkte des Avatars kann das virtuelle 3D-Idealdesign auf den Avatar projiziert bzw. übertragen bzw. gemappt werden. Insbesondere kann zuerst das virtuelle 3D-Idealdesign mit dem (vergrößerten) virtuellen individuellen 3D-Körpermodell registriert werden (d.h. das virtuelle 3D-Idealdesign und das virtuelle individuelle 3D-Körpermodell werden lokal übereinander gelegt), so dass Lage und Orientierung des virtuellen 3D-Idealdesigns und des virtuellen individuellen 3D-Körpermodells im Raum im Wesentlichen identisch sind.

In einer weiteren bevorzugten Ausführungsform wird auf Basis des zumindest einen erzeugten Schnittmusters zumindest ein finales virtuelles 3D-Kleidungsstück erzeugt und angezeigt. Das Anzeigen des finalen virtuellen 3D-Kleidungsstücks kann z.B. auf einem Display über Virtual Reality oder am echten Körper über Augmented Reality erfolgen. Mit anderen Worten wird das zumindest eine erzeugte zweidimensionale Schnittmuster wieder zu einem virtuellen 3D-Objekt (nämlich dem finalen virtuellen Kleidungsstück) zusammengefügt.

In einer weiteren bevorzugten Ausführungsform umfasst das Verfahren ferner ein Bestimmen von zumindest einem linearen Maß und/oder zumindest einem Körperumfang des Kunden auf Basis der ermittelten individuellen 3D-Körperhülledaten.

In einer weiteren bevorzugten Ausführungsform umfasst das Verfahren ferner ein Vergleichen des auf Basis der individuellen 3D-Körperhülledaten bestimmten zumindest einen linearen Maßes und/oder Körperumfangs des Kunden mit zumindest einem Standard-Schnittmuster (bzw. einem herkömmlichen Schnittmuster) und/oder mit zumindest einer vorgegebenen Maßtabelle (beispielsweise einer Damenoberbekleidungs-Maßtabelle). Durch einen solchen Vergleich ist es z.B. möglich, dass ein bereits vorhandenes virtuelles Design, welches meist nur auf (kleine) Standardgrößen zugeschnitten ist, und/oder ein bereits vorhandenes 2D-Schnittmuster bzw. Standardschnittmuster angepasst und auf ein virtuelles 3D-Idealdesign erweitert wird. Insbesondere kann durch einen solchen Vergleich ein bereits vorhandenes virtuelles Design und/oder 2D-Schnittmuster zu einem parametrischen 3D-Modell umgewandelt werden. Hierzu ist es hilfreich, wenn die individuellen 3D-Körperhülledaten mit bekannten (herkömmlichen) Industriedaten, insbesondere über (von der Industrie bzw.

Herstellern vorgegebene) Standardmaße und/oder Größentabellen, in Zusammenhang gebracht bzw. verglichen werden.

Ein weiterer unabhängiger Aspekt zur Lösung der Aufgabe betrifft ein Computerprogrammprodukt, welches maschinenlesbaren Programmcode umfasst, der, wenn er geladen wird auf einem Computer, zur Ausführung des oben beschriebenen erfindungsgemäßen Verfahrens geeignet ist. Insbesondere ist unter einem Computerprogrammprodukt ein auf einem Datenträger gespeichertes Programm zu verstehen. Insbesondere ist der Programmcode auf einem Datenträger gespeichert. Mit anderen Worten umfasst das Computerprogrammprodukt computerlesbare Anweisungen, welche, wenn geladen in einen Speicher eines Computers und ausgeführt von dem Computer, bewirken, dass der Computer ein oben beschriebenes erfindungsgemäßes Verfahren durchführt. Die Erfindung bietet somit ein Computerprogrammerzeugnis, insbesondere in Form eines Speichermediums oder eines Datenstroms, welches Programmcode enthält, der ausgelegt ist, wenn geladen und ausgeführt auf einem Computer, ein Verfahren gemäß der vorliegenden Erfindung, insbesondere in einer bevorzugten Ausführungsform, durchzuführen.

Ein weiterer unabhängiger Aspekt zur Lösung der Aufgabe betrifft eine Vorrichtung (Schnittmustererzeugungsvorrichtung) zum Bereitstellen zumindest eines Schnittmusters eines individuell für einen Kunden anzufertigenden Kleidungsstücks, umfassend:

- einen Prozessor bzw. ein von einem Prozessor ausgeführtes Berechnungsmodul, welcher bzw. welches ausgelegt ist:

   -- ein virtuelles 3D-Körpermodell des Kunden auf Basis von individuell ermittelten 3D-Körperhülledaten des Kunden und vorgegebenen allgemeinen Skelettdaten zu erzeugen,
   -- ein virtuelles individuelles 3D-Kleidungsstück auf Basis eines virtuellen 3D-Idealdesigns und des virtuellen 3D-Körpermodells zu erzeugen, und
   -- das zumindest eine Schnittmuster durch Abwickeln des virtuellen individuellen 3D-Kleidungsstücks zu erzeugen, wobei das Abwickeln des virtuellen individuellen 3D-Kleidungsstücks algorithmisch auf Basis zumindest eines Schnittregelwerks erfolgt.

Insbesondere kann die Vorrichtung ferner ein Datenbereitstellungsmodul umfassen, welches ausgelegt ist:

   -- die allgemeinen Skelettdaten, insbesondere in einem Speicher, bereitzustellen, und/oder
   -- das virtuelle 3D-Idealdesign des anzufertigenden Kleidungsstücks, insbesondere in einem Speicher, bereitzustellen.

Alternativ oder zusätzlich kann die Vorrichtung ein Datenerfassungsmodul umfassen, welches ausgelegt ist, die individuellen 3D-Körperhülledaten des Kunden zu erfassen.

Ferner kann die Vorrichtung Schneidmittel bzw. einen Schneid-Plotter zum Ausgeben des zumindest einen Schnittmusters umfassen. Unter Ausgeben des zumindest einen Schnittmusters wird insbesondere ein Zuschneiden eines Materials bzw. Stoffes verstanden.

Die vorliegende Erfindung bietet ferner die im Folgenden beschriebenen weiteren Aspekte, Merkmale, Ausführungsformen und Vorteile.

So umfasst in einer weiteren bevorzugten Ausführungsform das oben beschriebene Verfahren ferner den Schritt:

- Speichern des erzeugten virtuellen individuellen 3D-Körpermodells des Kunden in einer Avatar-Vergleichsdatenbank, wobei die Avatar-Vergleichsdatenbank eine Vielzahl von virtuellen individuellen 3D-Körpermodellen unterschiedlicher Kunden bereitstellt, um diese bereitgestellten virtuellen individuellen 3D-Körpermodelle miteinander zu vergleichen bzw. zu matchen.

Vorzugsweise umfasst die Avatar-Vergleichsdatenbank bereits eine Vielzahl von virtuellen individuellen 3D-Körpermodellen anderer Kunden. Insbesondere erfolgt das Vergleichen mit Hilfe eines Computers bzw. Prozessors. Insbesondere erfolgt das Vergleichen bzw. Matchen mit Hilfe einer Avatar-Vergleichseinrichtung bzw. einer Avatar-Matchingeinrichtung. Für das Vergleichen bzw. Matchen können beliebige, aus dem Stand der Technik bekannte, Methoden bzw. Algorithmen, insbesondere zur Merkmalsanalyse bzw. Merkmalserkennung, verwendet werden. Es ist dadurch z.B. möglich, virtuelle individuelle 3D-Körpermodelle mit ähnlichen oder gleichen Eigenschaften, die in der Avatar-Vergleichsdatenbank gespeichert sind bzw. von dieser bereitgestellt werden, ausfindig zu machen. Vorteilhafterweise kann somit auch das "Second Hand" Modesegment bedient werden. Beispielsweise kann es sein, dass ein Kunde, für den auf Basis des erfindungsgemäß bereitgestellten Schnittmusters ein individuelles Kleidungsstück hergestellt wurde, dieses Kleidungsstück irgendwann wieder verkaufen möchte. Dann kann mit Hilfe der Avatar-Vergleichsdatenbank der Avatar dieses Kunden mit zumindest einem Avatar eines anderen Kunden (vorzugsweise mehreren Avataren von anderen Kunden) verglichen und/oder gematcht werden. Mit anderen Worten kann in der Avatar-Vergleichsdatenbank zumindest ein Avatar von einem anderen Kunden (vorzugsweise mehrere Avatare von anderen Kunden) gesucht bzw. gefunden werden, der/die Ähnlichkeiten mit dem Avatar des Kunden, der sein individuelles Kleidungsstück wieder verkaufen möchte, aufweist/aufweisen. Beispielsweise kann auf Basis eines solchen Vergleichs bzw. gefundenen Matches automatisch einem anderen Kunden (insbesondere einem gematchten Kunden, d.h. einem Kunden, dem das Kleidungsstück im Wesentlichen passt) das (gebrauchte) Kleidungsstück zum Kauf angeboten werden. Insbesondere können Empfehlungen ausgesprochen werden, welche zum Verkauf stehende "Second-Hand"-Kleidung zu welchem Kunden passt. Dadurch kann auch im "Second-Hand" Modesegment ein "Size Matching" gewährleistet werden.

In einer weiteren bevorzugten Ausführungsform umfasst das Verfahren ferner den Schritt:

- Vergleichen des erzeugten virtuellen individuellen 3D-Körpermodells des Kunden mit anderen von der Avatar-Vergleichsdatenbank bereitgestellten virtuellen individuellen 3D-Körpermodelle.

Vorzugsweise umfasst das Verfahren (und insbesondere der oben erwähnte Schritt des Vergleichens) ein Matchen des erzeugten virtuellen individuellen 3D-Körpermodells des Kunden mit zumindest einem anderen, von der Avatar-Vergleichsdatenbank bereitgestellten, virtuellen individuellen 3D-Körpermodell. Ist ein solches "Match" gefunden, kann z.B. ein Hinweis bzw. eine Empfehlung in der Datenbank bzw. dem Speicher hinterlegt und/oder mit einer Ausgabeeinheit (z.B. Monitor oder Drucker) ausgegeben werden, welche Kunden hinsichtlich ihrer Körpereigenschaften und damit hinsichtlich der für sie individuell hergestellten Kleidungsstücke zusammenpassen.

In einer weiteren bevorzugten Ausführungsform umfasst das Verfahren ferner den Schritt:

- Zuordnen des erzeugten virtuellen individuellen 3D-Körpermodells des Kunden zu zumindest einer Avatar-Gruppe aus einer Vielzahl von vorgegebenen Avatar-Gruppen.

Die unterschiedlichen Avatar-Gruppen sind vorzugsweise jeweils durch bestimmte Körpereigenschaften, insbesondere Körpermaße und/oder Körperbesonderheiten (wie z.B. eine bestimmte Körperhaltung, eine bestimmte Körperunregelmäßigkeit und/oder eine bestimmte Körperfehlstellung) charakterisiert bzw. vorgegeben. Wie bereits erwähnt, kann das Verfahren ein Vergleichen bzw. Matchen des erzeugten virtuellen individuellen 3D-Körpermodells des Kunden mit zumindest einem anderen, von der Avatar-Vergleichsdatenbank bereitgestellten, virtuellen individuellen 3D-Körpermodell umfassen. Mit anderen Worten kann zumindest ein weiteres, von der Avatar-Vergleichsdatenbank bereitgestelltes, virtuelles individuelles 3D-Körpermodell gesucht bzw. gefunden werden, welches dem erzeugten virtuellen individuellen 3D-Körpermodell des Kunden (insbesondere im Hinblick auf bestimmte Körpereigenschaften) ähnlich ist bzw. welches zu dem erzeugten virtuellen individuellen 3D-Körpermodells des Kunden (insbesondere im Hinblick auf bestimmte Körpereigenschaften) passt.

Entsprechend kann die oben beschriebene Vorrichtung in einer weiteren bevorzugten Ausführungsform ferner umfassen:

- eine Avatar-Vergleichsdatenbank zum Speichern des erzeugten virtuellen individuellen 3D-Körpermodells des Kunden, wobei die Avatar-Vergleichsdatenbank eine Vielzahl von virtuellen individuellen 3D-Körpermodellen unterschiedlicher Kunden bereitstellt, um die bereitgestellten virtuellen individuellen 3D-Körpermodelle miteinander zu vergleichen.

Die Avatar-Vergleichsdatenbank kann insbesondere durch einen Speicher bzw. durch ein Speichermedium der Vorrichtung bereitgestellt werden. Es ist allerdings euch möglich, dass die Datenbank durch einen externen Server oder einer Cloud bereitgestellt wird.

In einer weiteren bevorzugten Ausführungsform umfasst die Vorrichtung ferner:

- eine Avatar-Vergleichseinrichtung bzw. eine Avatar-Matchingeinrichtung zum Vergleichen des erzeugten virtuellen individuellen 3D-Körpermodells des Kunden mit anderen von der Avatar-Vergleichsdatenbank bereitgestellten virtuellen individuellen 3D-Körpermodelle.

Insbesondere ist die Avatar-Vergleichseinrichtung bzw. Avatar-Matchingeinrichtung ausgelegt, um das erzeugte virtuelle individuelle 3D-Körpermodell des Kunden mit zumindest einem anderen, von der Avatar-Vergleichsdatenbank bereitgestellten, virtuellen individuellen 3D-Körpermodell zu matchen. Ferner kann die Avatar-Vergleichseinrichtung bzw. Avatar-Matchingeinrichtung ausgelegt sein, das erzeugte virtuelle individuelle 3D-Körpermodell des Kunden zumindest einer Avatar-Gruppe aus einer Vielzahl von vorgegebenen Avatar-Gruppen zuzuordnen. Die Avatar-Vergleichseinrichtung bzw. Avatar-Matchingeinrichtung kann z.B. ein Bestandteil eines Computers und/oder des Prozessors der Vorrichtung sein.

Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen unabhängigen Aspekte.

Im Folgenden werden einzelne Ausführungsformen zur Lösung der Aufgabe anhand von Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen, sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann und daher in Erwägung gezogen und auch als von der Beschreibung umfasst angesehen werden soll.

Kurze Beschreibung der Zeichnungen

Figur 1    zeigt ein schematisches Ablaufdiagramm zum Verfahren gemäß einer bevorzugten Ausführungsform der vorliegenden Erfindung;

Figur 2    zeigt ein schematisches Ablaufdiagramm zum Abwicklungsvorgang des virtuellen individuellen Kleidungsstücks von 3D nach 2D gemäß einer bevorzugten Ausführungsform der vorliegenden Erfindung;

Figur 3    zeigt ein schematisches Ablaufdiagramm zur Anzeige und Ausgabe des erzeugten Schnittmusters gemäß einer bevorzugten Ausführungsform der vorliegenden Erfindung;

Figur 4    zeigt eine schematische Zeichnung eines beispielhaften virtuellen Skeletts mit Fixpunkten in einer Vorderansicht (links) und Rückansicht (rechts);

Figur 5    zeigt ein schematisches Bild zur Erzeugung eines hochqualitativen virtuellen 3D-Körpermodells.

Detaillierte Beschreibung der Zeichnungen

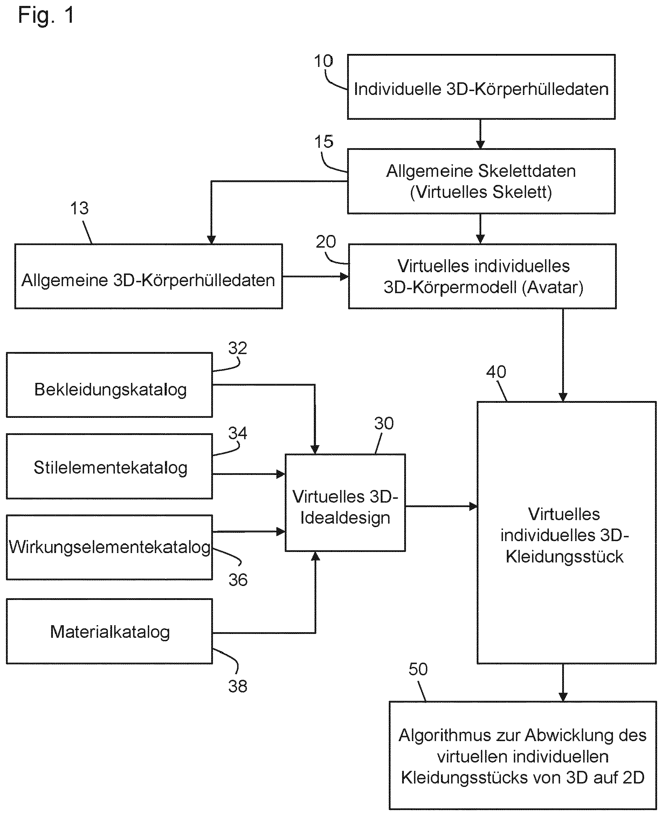

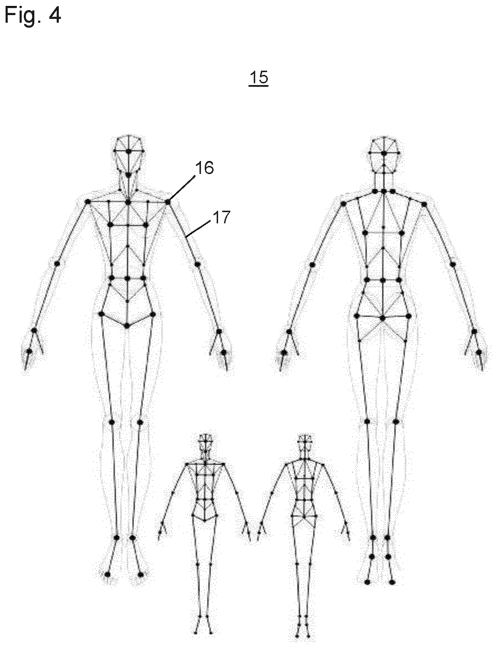

Die **Figur 1** zeigt ein Flussdiagramm zum Ablauf des Verfahrens gemäß einer bevorzugten Ausführungsform der vorliegenden Erfindung. Zunächst werden individuelle 3D-Körperhülledaten 10 eines realen Menschen (Kunden) erzeugt, z.B. mit einem Smartphone oder Tablet via App. Es handelt sich hierbei um einen Scanvorgang, so dass die 3D-Körperhülledaten Scan-Daten bzw. 3D-Meshdaten umfassen bzw. sind. Der Scanvorgang kann dabei in niedriger Qualität durchgeführt werden. Die individuellen 3D-Körperhülledaten werden mit bereitgestellten bzw. vordefinierten allgemeinen Skelettdaten bzw. einem virtuellen Skelett 15 (siehe Figur 4) verknüpft. Auf Basis der individuell ermittelten 3D-Körperhülledaten 10 des Kunden und der bereitgestellten allgemeinen Skelettdaten 15 wird schließlich ein virtuelles individuelles 3D-Körpermodell bzw. ein Avatar 20 des Kunden erzeugt.

Zudem können allgemeine 3D-Körperhülledaten (bzw. Modelldaten) 13 durch einen allgemeinen Idealscan, insbesondere eines Modells, bereitgestellt werden, welche ebenfalls mit den allgemeinen Skelettdaten 15 verknüpft werden, um auf diese Weise ein allgemeines perfektes 3D-Körpermodell zu erzeugen bzw. bereitzustellen. Durch eine Verknüpfung des bereitgestellten allgemeinen perfekten 3D-Körpermodells mit dem durch den 3D-Scan erzeugten virtuellen individuellen 3D-Körpermodell kann die Qualität des virtuellen individuellen 3D-Körpermodells erhöht werden. Denn durch eine solche Verknüpfung bzw. Projektion können Fehler oder Löcher des 3D-Meshes korrigiert werden. Mit anderen Worten kann ein hochqualitatives virtuelles individuelles 3D-Körpermodell 20 auf Basis der ermittelten individuellen 3D-Körperhülledaten 10, der bereitgestellten allgemeinen Skelettdaten 15 und der bereitgestellten allgemeinen 3D-Körperhülledaten erzeugt werden.

Es wird angemerkt, dass einige der im Flussdiagramm der Figur 1 dargestellten Linien bzw. Pfeile lediglich eine Verknüpfung zwischen zwei Datensätze (und nicht zwingend eine "Rechenrichtung") andeuten sollen. Beispielsweise können der Datensatz 10 und der Datensatz 15 miteinander verknüpft werden, um damit den Datensatz 20 zu erzeugen. Zusätzlich können die Datensätze 15 und 13 miteinander verknüpft werden, um schließlich durch eine Verknüpfung mit dem aus den Datensätzen 10 und 15 erhaltenem Datensatz 20 die Qualität des Datensatzes 20 (d.h. die Qualität des virtuellen individuellen 3D-Körpermodells) zu erhöhen.

Der Scan des Kunden kann z.B. als 3D-Oberflächennetzmodell in mittlerer ScanQualität vorliegen (mit vereinzelten Löchern des Scans). In diesen Scan wird das virtuelle Skelett platziert, das Knoten (Gelenke) und Verbindungselemente (Knochen) enthält. Die Platzierung des Skeletts kann über ein Neuronales Netz erfolgen. Parallel kann ein perfektes Basis-Mesh (d.h. eine Modelltopologie, welche insbesondere die Modelldaten und die allgemeinen Skelettdaten bzw. eine Kombination und/oder Verknüpfung bzw. Faltung davon umfasst) vorliegen, welches ein virtuelles Skelett mit genau denselben Knoten und Verbindungselementen enthält. Nachdem alle Knotenpunkte und/oder Verbindungselemente miteinander identifiziert wurden, wird das Scan-Skelett (d.h. das virtuelle individuelle 3D-Körpermodell) auf das perfekte Basis-Mesh gelegt (d.h. das virtuelle individuelle 3D-Körpermodell wird mit dem perfekten Basis-Mesh gemappt bzw. gematcht) und das Basis-Mesh wird durch das Scan-Skelett bzw. seinen Knoten (durch eine Oberflächenverformung in allen Meshbereichen, die sich in der Nähe der betroffenen Skelettknoten befinden) auf die Proportionen des 3D-Körperscans adaptiert. So kann im weiteren Verlauf mit einem geschlossenen Mesh-Modell gearbeitet werden, welches keine Fehler oder Löcher aufweist. Das "Mappen" bzw. "Matchen" des virtuellen individuellen 3D-Körpermodells mit dem perfekten Basis-Mesh umfasst bzw. ist insbesondere eine "Mesh Registrierung". Das 3D-Körpermodell (Avatar) kann durch einen editierbaren Satz von Eingabeparametern auf Größe, Körperbau, Form, Haltung und sogar dynamische (Bewegungs-) Eigenschaften editiert werden.

Zur Erzeugung eines virtuellen individuellen 3D-Kleidungsstücks 40 wird ein virtuelles 3D-Idealdesign 30 erstellt bzw. bereitgestellt. Dieses virtuelle 3D-Idealdesign kann auf Vorgaben des Designers und/oder Kunden aus einem Bekleidungskatalog 32, einem Stilelementekatalog 34, einem Wirkungselementekatalog 36 und/oder einem Materialkatalog 38 basieren. Aus dem Bekleidungskatalog 32 kann die Art des Kleidungsstücks (z.B. Jacke, Hose, Pullover, etc.) ausgewählt werden. Aus dem Stilelementekatalog 34 können Stilelemente, wie z.B. Puffärmel oder ein Reißverschluss, ausgewählt werden. Aus dem Wirkungselementekatalog 36 können bestimmte Wirkungselemente wie z.B. breite Schultern, schmale Taille, Brust kaschieren, etc. ausgewählt werden. Und aus dem Materialkatalog kann das Material des zu fertigenden Kleidungsstücks (z.B. Jeans, Popeline, Jersey, etc.) ausgewählt werden.

Stilelemente umfassen insbesondere sogenannte "Add-on's", die auf das Grundkleidungsstück gesetzt werden, z.B. Verbreiterung des Rocktellers, Einfügung Puffärmel am T-Shirt, Wasserfallkragen an Bluse, Buntfalten an Hose, Form der Hose ("Karottenform", "slim-fit", "high waist", "7/8 Länge", "Schlaghose"). Außerdem stehen als weitere Stilelemente Reißverschlüsse, Knöpfe, Klettverschlüsse oder Gummizüge zur Auswahl.

Wirkungselemente sind persönliche Präferenzen des Designers bzw. Kunden, die eine Betonung oder Vertuschung von Körperstellen erzeugen. In einer Abfrageauswahl kann der Kunde z.B. angeben, ob er beispielsweise schmale Schultern hat und diese gerne optisch verbreitern möchte, einen großen Busen hat und diesen optisch kaschieren möchte, eine schmale Taille hat und diese betonen möchte.

Bevor der erzeugte Avatar 20 im Frontend erscheint, finden im Backend eine semantische Mesh-Segmentierung und proportionale Volumenvergrößerung des Avatars 20 statt. Diese ist im Frontend nicht ersichtlich. Je Körpersegment parallel zur Rotationsachse des Körperteils wird eine Funktion gelegt, die den Rand des Volumens funktional in Abhängigkeit modelliert. Insbesondere sind mittels einer vorzeichenbehafteten Distanzfunktion ("dignet signed distance function") Abstände zur Oberfläche eingebaut, die je nach Körperteil variieren. Der konkret gewählte Abstand ist insbesondere vom Ort, von der Art des Textils und/oder vom Stil des Kleidungsstücks abhängig. Das 3D-Körpermodell (Avatar) kann durch einen editierbaren Satz von Eingabeparametern auf Größe, Körperbau, Form, Haltung und sogar dynamische (Bewegungs-) Eigenschaften editiert werden. Das heisst, dass Bewegungsabstände der einzelnen Gliedmasse unterschiedliche Bewegungsradien erzeugen und demnach unterschiedliche Abstände (für die Bewegungsfreiheit oder Stützfunktion bei Körperstellen, die betont werden sollen). Beispielsweise kann am Oberarm mehr Abstand kalkuliert werden als am Unterarm, oder an der Taille ein engerer Umfang, um diese zu betonen. Beispielsweise ist bei einem Ellenbogen der umlaufende Abstand größer als der Abstand zum Unterarm, oder der Achselbereich-Abstand umlaufend ist größer als der Abstand zum Oberarm. Dies gewährleistet eine gewisse Bewegungsfreiheit. Unterschiedliche Gliedmassen benötigen unterschiedliche Bewegungsfreiheiten bzw. haben unterschiedliche Rotationswinkel und benötigen unterschiedliche Freiheitsgrade. Daraus resultieren unterschiedliche Abstände von der Körperhülle zum Kleidungsstück.

Im Frontend wird ein virtueller Idealentwurf des Grund-Kleidungsstücks auf den virtuellen (Frontend) Avatar (ohne sichtliche Volumenvergrößerung) projiziert. Unter "Frontend" wird im Sinne der Erfindung insbesondere eine mobile Applikation (App) oder eine Website (bzw. ein Portal) verstanden, die dem Nutzer (Kunde, Endkonsument, Designer oder Schneider) als grafische Benutzerschnittstelle zur Verfügung steht. Im Frontend kann somit der Kunde Informationen sehen und selbst agieren. Unter "Backend" sind interne Vorgänge, die der Kunde innerhalb der Applikation bzw. Website nicht sieht und mit denen er nicht interagieren kann, zu verstehen. Insbesondere ist mit "Backend" ein Teil eines IT-Systems, der sich mit der Datenverarbeitung im Hintergrund beschäftigt, gemeint (d.h. der "Data Layer"). Der Begriff "Backend" kann also z.B. eine Berechnungs- und Optimierungssoftware umfassen, welche vorzugsweise auf einem Server gespeichert ist, und welche die notwendigen Berechnungen bzw. Algorithmen (im Hintergrund) ausführt.

Die Auswahl von Stilelementen und/oder Wirkungselementen erfolgt im Frontend. Im Backend bedeutet die Umsetzung der hinzugefügten "Add-on's" eine regionale Verformung der Oberfläche des Backend-Avatars. Beispielsweise wird bei T-Shirt mit Puffärmeln eine Kugel an die Schulter des Backend-Avatars modelliert, die das Volumen des Puffärmels wirklichkeitsgetreu abbildet. Bei einem Rock wird z.B. eine Hülle um die Beine gelegt, die mit der Außenseite der Beine verbunden ist. Im Backend wird insbesondere auf Höhe der Rocklänge (in dem Fall die Beine) und auf Höhe des Rockbunds der Rest des Körpers abgeschnitten, damit eine Abwicklung des Rockkörpers möglich ist. Bei einer taillierten Bluse mit ausgestellter Hüfte wird z.B. an der Hüfte seitlich jeweils ein Kegel modelliert. Außerdem kann eine Minima und Maxima Parametrisierung algorithmisch hinterlegt sein, d.h. wenn der Querschnitt eines Bundärmels den Radius einer Hand unterschreitet, werden Vorschläge gemacht, einen Reißverschluss oder einen Schlitz einzusetzen, damit ein Anziehen des Kleidungsstücks möglich ist. Bei einem Kragenausschnitt wird z.B. der Kopfumfang aus dem Scan berechnet, um sicherzustellen, dass ein Anziehen des Kleidungsstücks möglich ist. Falls dieser Radius unterschritten wird, werden automatisch Vorschläge gemacht, ob ein Reißverschluss oder Schlitz oder Sonstiges eingesetzt werden soll. Eine analoge Vorgehensweise wird z.B. bei einem Rock oder Kleid angewandt. Dabei werden insbesondere das Becken und der Schulterumfang bemessen. Im Backend werden die Wirkungselemente-z.B. basierend auf einer Abfrage von Körperteilen, die zu betonen oder zu kaschieren sind - insbesondere in die Anzahl und Hauptausrichtung der Schnittlinien übersetzt. Beispielsweise bei einem großen, zu kaschierenden Busen, können die Schnitteile im Segment des Brustbereichs eher kleinteilig angeordnet werden, d.h. es können mehr Schnittlinien als nötig gesetzt werden. Bei schmalen Schultern, die breiter erscheinen sollen, können Schnittlinien quer zur Körperachse (90 Grad) orientiert werden. Bei der Betonung einer schmalen Taille kann die Körperform im Segment des Bauchs längs zur Körperachse auslaufend orientiert werden.

Wie aus der Figur 1 ersichtlich, wird das virtuelle individuelle 3D-Kleidungsstück 40 auf Basis des virtuellen 3D-Idealdesigns 30 und des erzeugten virtuellen individuellen 3D-Körpermodells 20 generiert. Insbesondere wird der virtuelle Idealentwurf 30 des Kleidungsstücks auf den Avatar 20 projiziert. Hierbei ist eine vorgegebene Distanz zum Körper einzuhalten, um eine gewünschte Bewegungsfreiheit zu gewährleisten. Diese Distanz ergibt sich insbesondere aus dem zu verwendenden Material und der Art des Bekleidungsstücks. Für enganliegende Kleidung bzw. Kleidung aus Stretch-Stoffen genügt in der Regel 1 cm Abstand zum Körper. Für locker sitzende Kleidung ist z.B. ein umlaufender Abstand von 2 cm geeignet. Technisch wird dies insbesondere durch eine Volumenvergrößerung des Avatars 20 gelöst.

Nach Erzeugen des virtuellen individuellen 3D-Kleidungsstücks 40 erfolgt ein Abwickeln des virtuellen individuellen 3D-Kleidungsstücks 40 mit Hilfe eines Algorithmus 50 von 3D auf 2D, d.h. das virtuelle individuelle dreidimensionale Kleidungsstück 40 wird auf eine zweidimensionale Ebene projiziert.

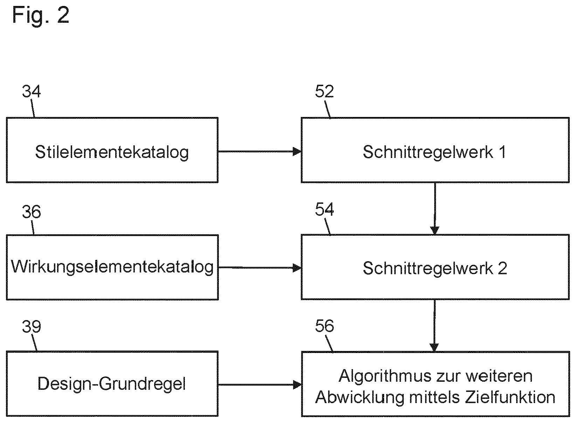

Die **Figur** 2 zeigt ein schematisches Ablaufdiagramm zum Abwicklungsvorgang des virtuellen individuellen Kleidungsstücks 40 von 3D nach 2D gemäß einer bevorzugten Ausführungsform. Wie aus Figur 2 hervorgeht, erfolgt das Abwickeln des virtuellen individuellen 3D-Kleidungsstücks 40 insbesondere auf Basis eines ersten Schnittregelwerks 52 und eines zweiten Schnittregelwerks 54. Ein oder mehrere erste Schnitte werden über den Stilelementekatalog 34 festgelegt. Beispielsweise können Schnittlinien für Reißverschlüsse etc. eingefügt werden. Weitere Schnitte werden über vom Designer und/oder Nutzer gewählte Wirkungselemente aus dem Wirkungselementekatalog 36 festgelegt, z.B. für eine schmale Taille etc. Weitere Schnittlinien werden insbesondere über einen Algorithmus unter Verwendung einer zu minimierenden Zielfunktion gesetzt. Dabei wird vorzugsweise eine Design-Grundregel berücksichtigt, welche besagt, dass zahlreiche Schnittlinien möglichst zu vermeiden bzw. zu verbergen sind. Stattdessen sollen möglichst wenige und klare Schnittlinien gesetzt werden.

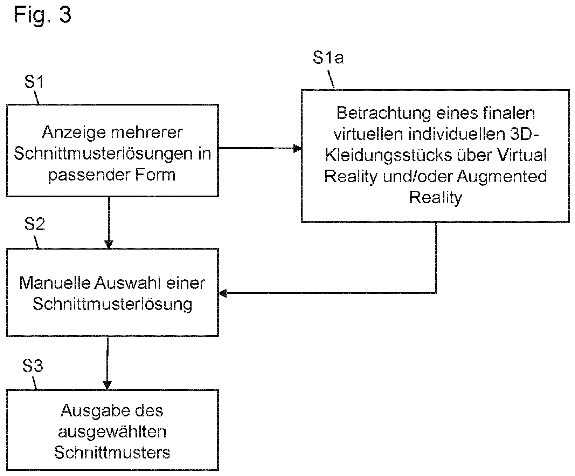

Die **Figur 3** zeigt ein schematisches Ablaufdiagramm zur Anzeige und Ausgabe des erzeugten Schnittmusters gemäß einer bevorzugten Ausführungsform. Gemäß eines Schritts S1 werden mehrere Schnittmusterlösungen, d.h. mehrere mögliche Schnittmuster, ausgegeben bzw. angezeigt, aus denen ein Nutzer auswählen kann. Dazu kann für jedes mögliche Schnittmuster ein dazugehöriges finales virtuelles individuelles 3D-Kleidungsstück erzeugt werden, welches am Avatar über Virtual Reality und/oder am realen Körper des Kunden über Augmented Reality betrachtet werden kann (Schritt S1a). Gemäß eines Schritts S2 wird aus den angezeigten Schnittmustern bzw. finalen virtuellen individuellen 3D-Kleidungsstücken eine Schnittmusterlösung ausgewählt. Das ausgewählte Schnittmuster kann dann in einem Schritt S3 ausgegeben werden, z.B. als pdf-Datei, als Ausdruck auf Papier oder über eine direkte Übertragung auf einen Schneid-Plotter auf Stoff (als realer Schnitt oder über Augmented Reality).

Die **Figur 4** zeigt eine schematische Zeichnung eines beispielhaften virtuellen Skeletts 15 mit Fix- bzw. Ankerpunkten 16 (welche insbesondere Gelenke repräsentieren) und Verbindungslinien 17 (welche insbesondere Knochen repräsentieren). Dabei ist auf der linken Seite der Figur 4 eine Vorderseite des virtuellen Skeletts 15 und auf der rechten Seite der Figur 4 eine Rückseite des virtuellen Skeletts 15 dargestellt. Die Ankerpunkte 16 und Verbindungslinien 17 und deren relative Anordnung im Raum (Koordinaten) bilden die allgemeinen Skelettdaten. In den beiden äußeren großen Darstellungen der Figur 4 ist jeweils die Hülle des menschlichen Körpers angedeutet. Die beiden mittleren kleineren Darstellungen der Figur 4 zeigen jeweils lediglich das virtuelle Skelett ohne Körperhülle.

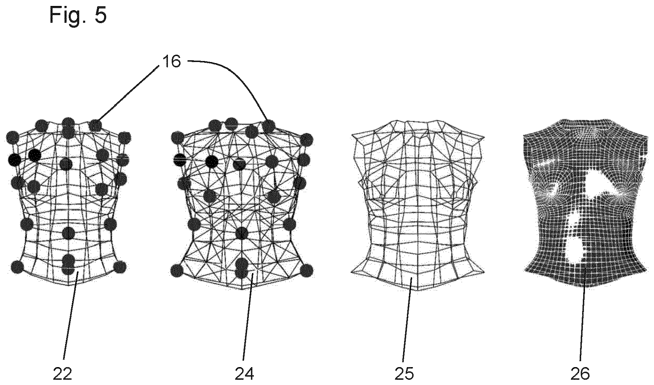

Die **Figur 5** zeigt ein schematisches Bild zur Erzeugung eines hochqualitativen virtuellen 3D-Körpermodells 26. Durch eine Handy-App können 3D-Scans von Personen genommen werden. Dabei reichen Körperscandaten 24 von mittlerer bis schlechter Qualität aus. Danach wird der Scan 24 auf ein ideales Referenzmodell bzw. ein Topologie-Modell 22 (Fixpunkte die gut aus den Scans lesbar sind, wie z.B. Schultern, Busen, Gesäß, etc.) gemappt bzw. projiziert. Dazu werden Topologie-Fixpunkte 16 eines virtuellen Skeletts 15 (siehe Figur 4) mit dem mit geringer oder mittlerer Qualität vorliegenden 3D-Körperscan 24 gemappt. Diese Topologie-Fixpunkte 16 werden mit entsprechenden bzw. zugehörigen Topologie-Fixpunkten 16 des Topologie-Modells 22 verknüpft und dadurch ein digital perfektes 3D-Mesh-Körpermodell 26 des gescannten Körpers (des Kunden) erzeugt. Insbesondere wird bei der Projektion bzw. beim Mappen das Topologie-Modell 22 verformt, um es auf die Größe des 3D-Scans 24 anzupassen. Ein auf den 3D-Scan 24 angepasstes und somit verformtes Topologie-Modell 25 ist ebenfalls in der Figur 5 beispielhaft gezeigt. Im Anschluss können digitale Mode-Designs, die ebenfalls mit Fix- bzw. Referenzpunkten 16 versehen sind, auf das perfekte 3D-Mesh-Körpermodell 18 abgebildet bzw. projiziert werden. Auf Basis zumindest eines Schnittlinien-Regelwerks kann sodann ein Schnittmuster generiert werden.

Das Schnittlinien-Regelwerk führt zur Erstellung von für die Person vorteilhaft generierten Schnittmustern. Je nach Körperform werden die Schnitte an anderen Stellen des Körpers platziert. Dieses Setzen von Schnittlinien entsteht aus der Topologie des jeweiligen Körperscans und wird durch die algorithmische Segmentierung (Zerlegung) und Abwicklung doppelt-gekrümmter (dreidimensionaler) Oberflächen mit niedrigen, optimierten Winkelverzerrungen erzeugt. Der Ansatz der Segmentierung von gekrümmten Oberflächen (mittels Schnittlinien in mehrere Patches) stellt insbesondere eine Komponente des vorliegenden Verfahrens dar, um aus doppelt-gekrümmten Oberflächen ebene Flächen zu erzeugen und Strukturen abzubilden, die aus flachen Materialien wie Papier oder Textilien produziert werden können. Doppelt gekrümmte Flächen exakt und ohne Verzerrung zweidimensional abzubilden ist mathematisch und deshalb auch technologisch gesehen nicht möglich, bzw. nur im Näherungsverfahren oder Optimierungsverfahren. Die doppelt-gekrümmten Flächen können im hier beschriebenen Verfahren nicht nur anhand ihrer Eigenschaften selbst (Krümmung und Länge der Kurven) bewertet werden. Die Projektion der Segmente auf eine planare (flache) Ebene liefert Verzerrungen bzw.

Verwerfungen, welche die angesetzten Schnittkurven implizieren sollen. Das heißt konkret, dass an den Stellen, an denen sich rein technologisch gesehen, die 3D-Flächen nicht auf 2D abwickeln lassen, weil dies zu Verwerfungen oder Überlagerungen von Stoffbahnen führen würde, automatisiert Schnittlinien gesetzt werden. Diese aus der Topologie heraus erzeugten Schnittlinien ergeben außerdem die bestmöglichste Passform für das anzufertigende Kleidungsstück und garantieren nach dem Zusammennähen des Stoffs den geringsten Faltenwurf des Kleidungsstücks, weil sie die kurvigsten Punkte (Hoch-Tiefpunkte) des Körpers darstellen. Die Segmentierung kann nach verschiedenen Kriterien als Initialisierung für den Algorithmus erfolgen. Beispielsweise kann ein Kriterium sein, dass zusammenhängende runde Bereiche geclustert werden sollen, so dass sich dadurch eine möglichst geringe Anzahl an Restflächen (Abfall) ergibt. Ein weiteres denkbares Kriterium ist, möglichst horizontale oder vertikale Flächen zusammenhängend zu erzeugen, um so Körperproportionen zu betonen oder schmaler erscheinen zu lassen. Es ist auch eine Initialisierung von kleinen "Patches" (Schnittmusterteilen) möglich, um z.B. im Brustbereich eine große Oberweite kleiner wirken zu lassen.

Zusammengefasst umfasst die vorliegende Erfindung ein neues Verfahren zur passgenauen und individuellen Schnittmusterherstellung mit Hilfe eines Algorithmus auf Basis von 3D-Körperscans. Insbesondere wird ausgehend von einem 3D-Körperscan eine Topologie mit vielen verschiedenen Fixpunkten des Körpers generiert, auf die ein Design projiziert wird. Die entstandene Projektion wird von einer 3D-Darstellung auf eine 2D-Darstellung skaliert (abgewickelt), damit sinnvolle Stoffstücke entstehen. Durch den Algorithmus werden insbesondere Abnäher und Schnittmuster automatisch erzeugt. Mit Hilfe der vorliegenden Erfindung können individuelle bzw. personifizierte Schnittmuster-Unikate generiert werden. Die Erfindung grenzt sich insbesondere von herkömmlichen Verfahren bzw. Systemen ab, in dem sie die Schnittmusteranfertigung vereinfacht und gleichzeitig die Kleidungsstücke noch passgenauer bzw. individuell angepasster sowie auch kostengünstiger macht.

Im Gegensatz zu herkömmlichen Verfahren, bei denen zur Herstellung von Kleidungsstücken stets ein vorhandenes 2D-Schnittmuster (Standard-Schnittmuster) verwendet und gegebenenfalls auf Basis von individuellen Scan-Daten des Kunden angepasst wird, kann mit Hilfe der vorliegende Erfindung ein individuelles Schnittmuster auf Basis von 3D-Körperhülledaten bzw. auf Basis von Scan-Daten direkt erzeugt werden. Ein bereits vorhandenes 2D-Standard-Schnittmuster wird somit nicht mehr benötigt. Während bisherige Verfahren also von einem zweidimensionalen "Grundschnitt" ausgehen, der z.B. auf symmetrischen Schnittteilen, welche gespiegelt werden können, beruht, kann mit dem erfindungsgemäßen Verfahren insbesondere die Topologie eines individuellen 3D-Scans des Körpers des Kunden berücksichtigt werden, um damit Körperoberflächen des Kunden individuell in Segmente, welche zweidimensional abwickelbar sind, zu unterteilen. Auf diese Weise kann ein individuelles Schnittmuster entstehen, welches auch nicht symmetrische Schnittbilder erzeugen kann. Die vorliegende Erfindung ermöglicht es somit, individuelle Körpereigenschaften des Kunden (wie z.B. einen Rundrücken, Fehlstellungen, einen kürzeren Arm oder ein kürzeres Bein, Behinderungen, etc.) für die Herstellung von Kleidungsstücken zu berücksichtigen.

**Bezugszeichenliste**

| | |
|---|---|
| 10 | Individuelle 3D-Körperhülledaten (Scan-Daten) |
| 13 | Allgemeine 3D-Körperhülledaten (Modell-Daten) |
| 15 | Allgemeine Skelettdaten (virtuelles Skelett) |
| 16 | Knoten (Ankerpunkt) |
| 17 | Verbindungselement |

20 Virtuelles individuelles 3D-Körpermodell (Avatar des Kunden)

22 Modell-Topologie (virtuelles allgemeines 3D-Körpermodell)

24 Gescanntes Modell (virtuelles individuelles 3D-Körpermodell bzw. Avatar)

25 Angepasste bzw. verformte Modell-Topologie

26 Verfeinerte Topologie (hochqualitativer Avatar des Kunden)

30 Virtuelles 3D-Idealdesign des anzufertigenden Kleidungsstücks

32 Bekleidungskatalog

34 Stilelementekatalog

36 Wirkungselementekatalog

38 Materialkatalog

39 Design-Grundregel

40 Virtuelles individuelles 3D-Kleidungsstück

50 Abwicklungsalgorithmus

52 Erster Schnittregelwerk

54 Zweites Schnittregelwerk

56 Algorithmus zur weiteren Abwicklung mittels einer Zielfunktion

S1 Anzeige mehrerer Schnittmusterlösungen in passender Form

S1a Betrachtung eines finalen virtuellen 3D-Kleidungsstücks über Virtual Reality und/oder Augmented Reality

S2 Manuelle Auswahl einer Schnittmusterlösung

S3 Ausgabe des ausgewählten Schnittmusters

Weitere Aspekte, Ausführungsformen und Merkmale der Erfindung werden durch die nachfolgende Aufzählung von "Punkten" näher beschrieben:

1. Verfahren zum Bereitstellen zumindest eines Schnittmusters eines individuell für einen Kunden anzufertigenden Kleidungsstücks, umfassend die Schritte:

- Erzeugen eines virtuellen individuellen 3D-Körpermodells (20) des Kunden auf Basis von individuell ermittelten 3D-Körperhülledaten (10) des Kunden und bereitgestellten allgemeinen Skelettdaten (15);
- Erzeugen eines virtuellen individuellen 3D-Kleidungsstücks (40) auf Basis eines virtuellen 3D-Idealdesigns (30) und des erzeugten virtuellen individuellen 3D-Körpermodells (20);
- Erzeugen des zumindest einen Schnittmusters durch Abwickeln des virtuellen individuellen 3D-Kleidungsstücks (40), wobei das Abwickeln des virtuellen individuellen 3D-Kleidungsstücks (40) algorithmisch auf Basis zumindest eines Schnittregelwerks (52, 54) erfolgt.

2. Verfahren nach Punkt 1, wobei das Erzeugen eines virtuellen individuellen 3D-Körpermodells (20) ferner auf Basis von bereitgestellten allgemeinen 3D-Körperhülledaten (13) erfolgt.

3. Verfahren nach Punkt 1 oder 2, wobei das Abwickeln des virtuellen individuellen 3D-Kleidungsstücks (40) auf Basis eines ersten Schnittregelwerks (52) und eines zweiten Schnittregelwerks (54) erfolgt, wobei das erste Schnittregelwerk (52) festgelegte Stilelemente des Kleidungsstücks und das zweite Schnittregelwerk (54) festgelegte Wirkungselemente des Kleidungsstücks berücksichtigt, und wobei vorzugsweise das erste Schnittregelwerk (52) vor dem zweiten Schnittregelwerk (54) angewendet wird.

4. Verfahren nach einem der vorangehenden Punkte, wobei das Abwickeln des virtuellen individuellen 3D-Kleidungsstücks (40) durch aufeinanderfolgendes Anwenden des ersten Schnittregelwerks (52) und des zweiten Schnittregelwerks (54) erfolgt, und wobei das Abwickeln des virtuellen individuellen 3D-Kleidungsstücks (40) ferner auf Basis eines automatisierten Abwicklungsalgorithmus (50), insbesondere unter Verwendung einer zu minimierenden Zielfunktion, erfolgt.

5. Verfahren nach einem der vorangehenden Punkte, wobei das Abwickeln des virtuellen individuellen 3D-Kleidungsstücks (40), in dieser Reihenfolge, ein Generieren eines oder mehrerer etwaiger Schnitte auf Basis eines ersten Schnittregelwerks, ein Generieren eines oder mehrerer etwaiger Schnitte auf Basis eines zweiten Schnittregelwerks, und ein Generieren eines oder mehrerer etwaiger Schnitte auf Basis eines automatisierten Abwicklungsalgorithmus (50), insbesondere unter Verwendung einer zu minimierenden Zielfunktion, erfolgt.

6. Verfahren nach einem der vorangehenden Punkte,

wobei das Abwickeln des virtuellen individuellen 3D-Kleidungsstücks (40) ein Minimieren einer Zielfunktion umfasst, und
wobei die Zielfunktion insbesondere einen Verzerrungs-Energieterm und/oder einen Längenregularisierungs-Energieterm und/oder einen Spannungs-Energieterm umfasst.

7. Verfahren nach Punkt 6, wobei die Zielfunktion durch die Gleichung $E(p) = \alpha E_D(p) + \beta E_L(p) + \gamma E_S(p)$ definiert wird, wobei $E_D(p)$ den Verzerrungs-Energieterm, $E_L(p)$ den Längenregularisierungs-Energieterm, $E_S(p)$ den Spannungs-Energieterm und $\alpha, \beta, \gamma > 0$ zu den jeweiligen Energietermen zugehörige Gewichtsfaktoren darstellen.

8. Verfahren nach einem der vorangehenden Punkte, wobei das Erzeugen eines virtuellen individuellen 3D-Kleidungsstücks (40) auf Basis von Benutzervorgaben erfolgt und insbesondere ein Auswählen aus einem vorgegebenen BekleidungsKatalog (32), einem vorgegebenen Stilelemente-Katalog (34), einem vorgegebenen Wirkungselemente-Katalog (36) und/oder einem vorgegebenen Material-Katalog (38) umfasst.

9. Verfahren nach einem der vorangehenden Punkte, wobei das Erzeugen eines virtuellen individuellen 3D-Kleidungsstücks (40) umfasst:

-- Vergrößern des Volumens des virtuellen individuellen 3D-Körpermodells (20) in Abhängigkeit der Art des Bekleidungsstücks und/oder in Abhängigkeit eines ausgewählten Materials und/oder in Abhängigkeit einer simulierten Bewegung des virtuellen individuellen 3D-Körpermodells.

10. Verfahren nach Punkt 9, wobei das Erzeugen eines virtuellen individuellen 3D-Kleidungsstücks (40) ferner umfasst:

-- Projizieren des virtuellen 3D-Idealdesigns (30) auf die Hülle des vergrößerten virtuellen individuellen 3D-Körpermodells.

11. Verfahren nach einem der vorangehenden Punkte, wobei auf Basis des zumindest einen erzeugten Schnittmusters zumindest ein finales virtuelles individuelles 3D-Kleidungsstück erzeugt und angezeigt wird.

12. Verfahren nach einem der vorangehenden Punkte, ferner umfassend:

- Bestimmen von zumindest einem linearen Maß und/oder zumindest einem Körperumfang des Kunden auf Basis der ermittelten individuellen 3D-Körperhülledaten (10).

13. Verfahren nach Punkt 12, ferner umfassend:

- Vergleichen des auf Basis der individuellen 3D-Körperhülledaten (10) bestimmten zumindest einen linearen Maßes und/oder Körperumfangs des Kunden mit zumindest einem Standard-Schnittmuster und/oder mit zumindest einer vorgegebenen Maßtabelle.

14. Verfahren nach einem der vorangehenden Punkte, ferner umfassend:

- Speichern des erzeugten virtuellen individuellen 3D-Körpermodells (20) des Kunden in einer Avatar-Vergleichsdatenbank, wobei die Avatar-Vergleichsdatenbank eine Vielzahl von virtuellen individuellen 3D-Körpermodellen unterschiedlicher Kunden

bereitstellt, um diese bereitgestellten virtuellen individuellen 3D-Körpermodelle miteinander zu vergleichen.

15. Verfahren nach Punkt 14, ferner umfassend:

- Vergleichen des erzeugten virtuellen individuellen 3D-Körpermodells (20) des Kunden mit anderen von der Avatar-Vergleichsdatenbank bereitgestellten virtuellen individuellen 3D-Körpermodelle.

16. Verfahren nach einem der vorangehenden Punkte, ferner umfassend:

- Zuordnen des erzeugten virtuellen individuellen 3D-Körpermodells (20) des Kunden zu zumindest einer Avatar-Gruppe aus einer Vielzahl von vorgegebenen Avatar-Gruppen.

17. Computerprogrammprodukt umfassend computerlesbare Anweisungen, welche, wenn geladen in einen Speicher eines Computers und ausgeführt von dem Computer, bewirken, dass der Computer ein Verfahren gemäß einem der vorangehenden Punkte durchführt.

18. Vorrichtung zum Bereitstellen zumindest eines Schnittmusters eines individuell für einen Kunden anzufertigenden Kleidungsstücks, umfassend:

- einen Prozessor, welcher ausgelegt ist:

-- ein virtuelles individuelles 3D-Körpermodell (20) des Kunden auf Basis von individuell ermittelten 3D-Körperhülledaten (10) des Kunden und vorgegebenen allgemeinen Skelettdaten (15) zu erzeugen,
-- ein virtuelles individuelles 3D-Kleidungsstück (40) auf Basis eines virtuellen 3D-Idealdesigns (30) und des virtuellen individuellen 3D-Körpermodells (20) zu erzeugen, und
-- das zumindest eine Schnittmuster durch Abwickeln des virtuellen individuellen 3D-Kleidungsstücks (40) zu erzeugen, wobei das Abwickeln des virtuellen individuellen 3D-Kleidungsstücks (40) algorithmisch auf Basis zumindest eines Schnittregelwerks (52, 54) erfolgt.

19. Vorrichtung nach Punkt 18, ferner umfassend:

- eine Avatar-Vergleichsdatenbank zum Speichern des erzeugten virtuellen individuellen 3D-Körpermodells (20) des Kunden, wobei die Avatar-Vergleichsdatenbank eine Vielzahl von virtuellen individuellen 3D-Körpermodellen unterschiedlicher Kunden bereitstellt, um die bereitgestellten virtuellen individuellen 3D-Körpermodelle miteinander zu vergleichen.

20. Vorrichtung nach Punkt 19, ferner umfassend:

- eine Avatar-Matchingeinrichtung zum Vergleichen des erzeugten virtuellen individuellen 3D-Körpermodells (20) des Kunden mit anderen von der Avatar-Vergleichsdatenbank bereitgestellten virtuellen individuellen 3D-Körpermodelle.

**Patentansprüche**

1. Verfahren zum Bereitstellen zumindest eines Schnittmusters eines individuell für einen Kunden anzufertigenden Kleidungsstücks, umfassend die Schritte:

   - Erzeugen eines virtuellen individuellen 3D-Körpermodells (20) des Kunden auf Basis von individuell ermittelten 3D-Körperhülledaten (10) des Kunden und bereitgestellten allgemeinen Skelettdaten (15);
   - Erzeugen eines virtuellen individuellen 3D-Kleidungsstücks (40) auf Basis eines virtuellen 3D-Idealdesigns (30) und des erzeugten virtuellen individuellen 3D-Körpermodells (20);
   - Erzeugen des zumindest einen Schnittmusters durch Abwickeln des virtuellen individuellen 3D-Kleidungsstücks (40), wobei das Abwickeln des virtuellen individuellen 3D-Kleidungsstücks (40) auf Basis eines ersten Schnittregelwerks (52) und eines zweiten Schnittregelwerks (54) erfolgt, wobei das erste Schnittregelwerk (52) festgelegte Stilelemente des Kleidungsstücks und das zweite Schnittregelwerk (54) festgelegte Wirkungselemente des Kleidungsstücks berücksichtigt.

2. Verfahren nach Anspruch 1, wobei das Abwickeln des virtuellen individuellen 3D-Kleidungsstücks (40) durch aufeinanderfolgendes Anwenden des ersten Schnittregelwerks (52) und des zweiten Schnittregelwerks (54) erfolgt, und wobei das Abwickeln des virtuellen individuellen 3D-Kleidungsstücks (40) ferner auf Basis eines automatisierten Abwicklungsalgorithmus (50), insbesondere unter Verwendung einer zu minimierenden Zielfunktion, erfolgt.

3. Verfahren nach einem der vorangehenden Ansprüche, wobei das Abwickeln des virtuellen individuellen 3D-Kleidungsstücks (40), in dieser Reihenfolge, ein Generieren eines oder mehrerer etwaiger Schnitte auf Basis des ersten Schnittregelwerks, ein Generieren eines oder mehrerer etwaiger Schnitte auf Basis des zweiten Schnittregelwerks, und ferner ein Generieren eines oder mehrerer etwaiger Schnitte auf Basis eines automatisierten Abwicklungsalgorithmus (50), insbesondere unter Verwendung einer zu minimierenden Zielfunktion, erfolgt.

4. Verfahren nach einem der vorangehenden Ansprüche,

   wobei das Abwickeln des virtuellen individuellen 3D-Kleidungsstücks (40) ein Minimieren einer Zielfunktion umfasst, und
   wobei die Zielfunktion einen Verzerrungs-Energieterm und/oder einen Längenregularisierungs-Energieterm und/oder einen Spannungs-Energieterm umfasst.

5. Verfahren nach Anspruch 4, wobei die Zielfunktion durch die Gleichung $E(p) = \alpha E_D(p) + \beta E_L(p) + \gamma E_S(p)$ definiert wird, wobei $E_D(p)$ den Verzerrungs-Energieterm, $E_L(p)$ den Längenregularisierungs-Energieterm, $E_S(p)$ den Spannungs-Energieterm und $\alpha, \beta, \gamma > 0$ zu den jeweiligen Energietermen zugehörige Gewichtsfaktoren darstellen.

6. Verfahren nach einem der vorangehenden Ansprüche, wobei das Erzeugen eines virtuellen individuellen 3D-Kleidungsstücks (40) umfasst:

   -- Vergrößern des Volumens des virtuellen individuellen 3D-Körpermodells (20) in Abhängigkeit der Art des Bekleidungsstücks und/oder in Abhängigkeit eines ausgewählten Materials und/oder in Abhängigkeit einer simulierten Bewegung des virtuellen individuellen 3D-Körpermodells; und

   wobei das Erzeugen eines virtuellen individuellen 3D-Kleidungsstücks (40) vorzugsweise ferner umfasst:

   -- Projizieren des virtuellen 3D-Idealdesigns (30) auf die Hülle des vergrößerten virtuellen individuellen 3D-Körpermodells.

7. Verfahren nach einem der vorangehenden Ansprüche, wobei auf Basis des zumindest einen erzeugten Schnittmusters zumindest ein finales virtuelles individuelles 3D-Kleidungsstück erzeugt und angezeigt wird.

8. Verfahren nach einem der vorangehenden Ansprüche, ferner umfassend:

   - Bestimmen von zumindest einem linearen Maß und/oder zumindest einem Körperumfang des Kunden auf Basis der ermittelten individuellen 3D-Körperhülledaten (10); und vorzugsweise ferner umfassend:

- Vergleichen des auf Basis der individuellen 3D-Körperhülledaten (10) bestimmten zumindest einen linearen Maßes und/oder Körperumfangs des Kunden mit zumindest einem Standard-Schnittmuster und/oder mit zumindest einer vorgegebenen Maßtabelle.

9. Verfahren nach einem der vorangehenden Ansprüche, ferner umfassend:

- Speichern des erzeugten virtuellen individuellen 3D-Körpermodells (20) des Kunden in einer Avatar-Vergleichsdatenbank, wobei die Avatar-Vergleichsdatenbank eine Vielzahl von virtuellen individuellen 3D-Körpermodellen unterschiedlicher Kunden bereitstellt, um diese bereitgestellten virtuellen individuellen 3D-Körpermodelle miteinander zu vergleichen.

10. Verfahren nach Anspruch 9, ferner umfassend:

- Vergleichen des erzeugten virtuellen individuellen 3D-Körpermodells (20) des Kunden mit anderen von der Avatar-Vergleichsdatenbank bereitgestellten virtuellen individuellen 3D-Körpermodelle.

11. Verfahren nach einem der vorangehenden Ansprüche, ferner umfassend:

- Zuordnen des erzeugten virtuellen individuellen 3D-Körpermodells (20) des Kunden zu zumindest einer Avatar-Gruppe aus einer Vielzahl von vorgegebenen Avatar-Gruppen.

12. Computerprogrammprodukt umfassend computerlesbare Anweisungen, welche, wenn geladen in einen Speicher eines Computers und ausgeführt von dem Computer, bewirken, dass der Computer ein Verfahren gemäß einem der vorangehenden Ansprüche durchführt.

13. Vorrichtung zum Bereitstellen zumindest eines Schnittmusters eines individuell für einen Kunden anzufertigenden Kleidungsstücks, umfassend:

- einen Prozessor, welcher ausgelegt ist:

-- ein virtuelles individuelles 3D-Körpermodell (20) des Kunden auf Basis von individuell ermittelten 3D-Körperhülledaten (10) des Kunden und vorgegebenen allgemeinen Skelettdaten (15) zu erzeugen,
-- ein virtuelles individuelles 3D-Kleidungsstück (40) auf Basis eines virtuellen 3D-Idealdesigns (30) und des virtuellen individuellen 3D-Körpermodells (20) zu erzeugen, und

-- das zumindest eine Schnittmuster durch Abwickeln des virtuellen individuellen 3D-Kleidungsstücks (40) zu erzeugen, wobei das Abwickeln des virtuellen individuellen 3D-Kleidungsstücks (40) auf Basis eines ersten Schnittregelwerks (52) und eines zweiten Schnittregelwerks (54) erfolgt, wobei das erste Schnittregelwerk (52) festgelegte Stilelemente des Kleidungsstücks und das zweite Schnittregelwerk (54) festgelegte Wirkungselemente des Kleidungsstücks berücksichtigt.

14. Vorrichtung nach Anspruch 13, ferner umfassend:

- eine Avatar-Vergleichsdatenbank zum Speichern des erzeugten virtuellen individuellen 3D-Körpermodells (20) des Kunden, wobei die Avatar-Vergleichsdatenbank eine Vielzahl von virtuellen individuellen 3D-Körpermodellen unterschiedlicher Kunden bereitstellt, um die bereitgestellten virtuellen individuellen 3D-Körpermodelle miteinander zu vergleichen.

15. Vorrichtung nach Anspruch 14, ferner umfassend:

- eine Avatar-Matchingeinrichtung zum Vergleichen des erzeugten virtuellen individuellen 3D-Körpermodells (20) des Kunden mit anderen von der Avatar-Vergleichsdatenbank bereitgestellten virtuellen individuellen 3D-Körpermodelle.

## Fig. 1

Fig. 2

| 34 | | 52 |
|---|---|---|
| Stilelementekatalog | → | Schnittregelwerk 1 |
| 36 | | 54 |
| Wirkungselementekatalog | → | Schnittregelwerk 2 |
| 39 | | 56 |
| Design-Grundregel | → | Algorithmus zur weiteren Abwicklung mittels Zielfunktion |

## Fig. 3

S1a

S1

```
┌─────────────────────┐          ┌──────────────────────────┐
│                     │          │  Betrachtung eines finalen │
│  Anzeige mehrerer   │          │  virtuellen individuellen 3D-│
│ Schnittmusterlösungen in│ ────────▶│  Kleidungsstücks über Virtual│
│   passender Form    │          │  Reality und/oder Augmented │
│                     │          │        Reality           │
└─────────────────────┘          └──────────────────────────┘
```

S2

```
┌─────────────────────┐
│                     │
│ Manuelle Auswahl einer│ ◀──────────────
│  Schnittmusterlösung │
│                     │
└─────────────────────┘
```

S3

```
┌─────────────────────┐
│    Ausgabe des      │
│   ausgewählten      │
│   Schnittmusters    │
└─────────────────────┘
```

Fig. 4

15

16

17

Fig. 5

16

22    24    25    26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Historische Schnitte HAKA: Schnittkonstruktionen. Rundschau-Verlag Otto G. Königer, 2001
- **S. STOFER ; M. STIEGLER ; L. KROLOPP.** Schnittkonstruktionen für Jacken und Mäntel: M. Müller & Sohn. Rundschau Verlag, 1994, vol. 24
- **W. SCHIERBAUM.** Bekleidungs-Lexikon: Mode, Formgestaltung, Schnittkonstruktion, Gradierung, Ausstattung, Zuschnitt, Verarbeitungstechnik, Bügeln, Management u. Marketing. Schiele & Schön, 1982
- **DONG XU et al.** Poisson shape interpolation. *Graphical Models,* 2006, vol. 68 (3), ISSN 1524-0703, 268-281, https://doi.org/10.1016/j.gmod.2006.03.001